# EUROPEAN PATENT APPLICATION

(11) **EP 2 784 677 A1**
(43) Date of publication of application: **01.10.2014**
(21) Application number: 14159470.5
(22) Date of filing: 13.03.2014
(51) Int. Cl.: G06F 11/07

(54) **Processing apparatus, program and method for logically separating an abnormal device based on abnormality count and a threshold**

(30) Priority: 26.03.2013 JP 2013063874
(71) Applicant: FUJITSU LIMITED, Kawasaki-shi, Kanagawa 211-8588 (JP)
(72) Inventor: Kanayama, Tomoyuki, Kanagawa, 211-8588 (JP)
(74) Representative: HOFFMANN EITLE

(57) **Abstract**

A processing apparatus that constitutes an information processing system includes: a device that constitutes the processing apparatus; and a processing unit that detects an abnormality in the device, that counts the number of the abnormalities detected in the device, and that logically separates the device from the information processing system when the counted number of the abnormalities detected in the device is equal to or greater than a threshold.

## Description

### FIELD

The embodiments discussed herein are related to a processing apparatus, a processing program, and a processing method.

### BACKGROUND

In an information processing system such as a storage system or a server system, the redundancy of information processing apparatuses that form the system allows the entirety of the system to continue an operation even when an abnormality occurs in any of the information processing apparatuses, thereby improving the system reliability.

The following are examples of techniques to efficiently recover from a fault in a system.

In a first technique, in a device wherein a main control unit and a constitution module are connected via a communication line, when a fault occurs in a communication, the main control unit performs a check operation, and fault specifying means is provided for specifying a fault according to the response from the check operation. Hence, the main control unit, the constitution module, or the communication line may be recognized as a fault part, so that the maintenance time for its recovery can be remarkably shortened, and the recovery can be speeded up, thereby improving the degree of use of the device.

A second technique relates to a gateway apparatus for connecting an existing public switched telephone network (PSTN) to an IP (Internet Protocol) network, allows various types of media and networks to be flexibly dealt with, and improves reliability and maintainability. In the second technique, the apparatus is configured to separate hardware into functional blocks such as a PSTN interface unit, a processing unit having a conversion function between a PCM (Pulse Code Modulation) signal and IP packets, an IP interface unit, and a control unit for controlling the overall apparatus. The hardware blocks are exchanged each other depending on the types of opposite networks or media, thereby dealing with various types of PSTNs, IP networks or various services such as VoIP (voice over IP) or NAS/ RAS (Network Access Server/Remote Access Server).
Patent document 1: Japanese Laid-open Patent Publication No. 8-278925
Patent document 2: Japanese Laid-open Patent Publication No. 2003-188986

### SUMMARY

An aspect of the present invention provides a processing apparatus that improves the availability of an information processing system.

A processing apparatus in accordance with the present embodiment that constitutes an information processing system includes: a device that constitutes the processing apparatus; and a processing unit. The processing unit detects an abnormality in the device and counts the number of abnormalities detected in the device; when the counted number of abnormalities in the device is equal to or greater than a threshold, the processing unit logically separates the device from the information processing system.

### DESCRIPTION OF EMBODIMENTS

FIG. 1 illustrates an example of an information processing system in accordance with the embodiment.
FIG. 2 illustrates an exemplary configuration of a storage system in accordance with the embodiment.
FIG. 3 illustrates an example of a state check packet in accordance with the embodiment.
FIG. 4 illustrates state monitoring registers in accordance with the embodiment.
FIG. 5 illustrates an example of a separation-threshold storing table for functional blocks in accordance with the embodiment.
FIG. 6 illustrates notations for state monitoring registers in accordance with the embodiment.
FIG. 7 illustrates exemplary flows of operations performed by CMs during normal time in accordance with the embodiment.
FIG. 8A illustrates an exemplary flow of a separating operation in accordance with the embodiment performed when an abnormality (not pathway fault) occurs in one system of a pair of systems (part 1).
FIG. 8B illustrates an exemplary flow of a separating operation in accordance with the embodiment performed when an abnormality (not pathway fault) occurs in one system of a pair of systems (part 2).
FIG. 8C illustrates an exemplary flow of a separating operation in accordance with the embodiment performed when an abnormality (not pathway fault) occurs in one system of a pair of systems (part 3).
FIG. 9A illustrates an exemplary flow of a separating operation in accordance with the embodiment performed when a system abnormality (pathway fault) occurs (part 1).
FIG. 9B illustrates an exemplary flow of a separating operation in accordance with the embodiment performed when a system abnormality (pathway fault) occurs (part 2).
FIG. 9C illustrates an exemplary flow of a separating operation in accordance with the embodiment performed when a system abnormality (pathway fault) occurs (part 3).
FIG. 10A illustrates an exemplary flow of a separating operation performed when a system abnormality (pathway fault) occurs in a situation in which an FE is a fault portion at the time of an initial fault (part 1).
FIG. 10B illustrates an exemplary flow of a separating operation performed when a system abnormality (pathway fault) occurs in a situation in which an FE is a fault portion at the time of an initial fault (part 2).
FIG. 10C illustrates an exemplary flow of a separating operation performed when a system abnormality (pathway fault) occurs in a situation in which an FE is a fault portion at the time of an initial fault (part 3) .
FIG. 11A illustrates an exemplary flow of a maintenance operation (change of an FE) in accordance with the embodiment (part 1).
FIG. 11B illustrates an exemplary flow of a maintenance operation (change of an FE) in accordance with the embodiment (part 2).
FIG. 12A illustrates an exemplary flow of an operation performed for maintenance (maintenance for a condition in which an FE cannot be removed) in accordance with the embodiment (part 1).
FIG. 12B illustrates an exemplary flow of an operation performed for maintenance (maintenance for a condition in which an FE cannot be removed) in accordance with the embodiment (part 2).
FIG. 13A illustrates an exemplary flow of an operation performed when a state managing unit in accordance with the embodiment fails (part 1).
FIG. 13B illustrates an exemplary flow of an operation performed when a state managing unit in accordance with the embodiment fails (part 2).
FIG. 14 illustrates an exemplary flow of maintenance in accordance with the embodiment performed when a CM 0 and a CM 1 each have a different block separated therefrom.
FIG. 15 illustrates another exemplary flow of maintenance in accordance with the embodiment performed when a CM 0 and a CM 1 each have a different functional block separated therefrom.
FIG. 16 illustrates an exemplary flow of separating a functional block in accordance with the embodiment, the separating depending on the number of abnormalities that have occurred.
FIG. 17 illustrates an exemplary flow of adjusting a threshold used to separate a functional block in accordance with the embodiment, the adjusting depending on whether the redundancy of functional blocks is maintained.

### DESCRIPTION OF EMBODIMENTS

In an information processing system, an increase in the number of portions separated from the system due to the occurrence of an abnormality decreases system availability and reliability. Thus, it is desirable to locate and separate a particular abnormality occurring point from among abnormality occurring points. However, in the first and second techniques, a particular abnormality occurring point is not located and separated. Thus, irrespective of whether the separating is needed, the separating of an abnormality occurring point could disadvantageously decrease system availability.

The present embodiment provides a processing apparatus that improves the availability of an information processing system.

In an information processing system that includes information processing apparatuses in a redundant configuration, an increase in the number of points separated from the system due to the occurrence of an abnormality decreases system availability and reliability. Thus, it is desirable to locate and separate a particular abnormality occurring point from among abnormality occurring points. However, in the first and second techniques, a particular abnormality occurring point is not located and separated. Hence, an increase in the likelihood of losing the redundancy of an abnormality occurring point could disadvantageously decrease system availability.

When an abnormality occurs in a pathway that connects devices within a system, a controlling unit that includes, for example, a central processing unit (CPU) and a chipset separates the abnormal portion. A maintenance person replaces the separated portion. However, the controlling unit separates the entirety of the pathway because it is unclear which portion is suspicious. Hence, the entirety of the pathway is replaced.

For example, in an RAID apparatus, when an abnormality occurs in a pathway that connects a front end (FE: host port connecting unit), an FE relay device, and a controlling unit, all of the FE, the FE relay device, and the controlling unit are separated. However, the separating of the controlling unit is meaningless when the cause of the abnormality resides in the FE or the FE relay device. In addition, a controller module (CM) body also needs to be replaced. This decreases the redundancy of memories (where user data is stored). Excessively many members are replaced. The system recovery time (MTTR) also becomes long.

Similarly, for example, when an abnormality occurs in a pathway that connects a back end (BE: disk connecting unit), a BE relay device, and a controlling unit, all of the BE, the BE relay device, and the controlling unit are separated. However, the separating of the controlling unit and the BE relay device is meaningless when the cause of the abnormality resides in the BE. In addition, a CM body also needs to be replaced. This decreases the redundancies of memories (where user data is stored) and some pathways of the back end. Excessively many members are replaced. The system recovery time (MTTR) also becomes long.

The separating of the controlling unit and the BE is meaningless when the cause of the abnormality resides in the BE relay device. In addition, the CM body also needs to be replaced. This decreases the redundancies of memories (where user data is stored) and some pathways of the back end. Excessively many members are replaced. The system recovery time (MTTR) also becomes long. The separating of the BE and the BE relay device is meaningless when the cause of the abnormality resides in the controlling unit. This decreases the redundancy of backend pathways.

Accordingly, in an exemplary embodiment, a failed point is identified and a suspicious site is separated.

When a controlling unit is not operated during the occurrence of an abnormality, a recovery process cannot be performed by separating a failed point, and hence a CM is separated due to ignorance of the failed point. Since the controlling unit controls the entirety of the system, an abnormality in another device could possibly affect an operation of the controlling unit. This causes the separating of a CM to be often performed. The following are exemplary situations in which the controlling unit stops operation.
- The controlling unit becomes sluggish or is operated abnormally due to a failure of or processing delay at a site different from the controlling unit (e.g. , the controlling unit issues a command to a device under control of this controlling unit but does not obtain a normal response result).
- The controlling unit is excessively separated as described above. (In this case, a CM failure occurs when the controlling unit has a malfunction. Consequently, a CM failure often happens.)

Accordingly, in an exemplary embodiment, a state managing unit that is not affected by another device operation mainly performs processes of separating a failed portion.

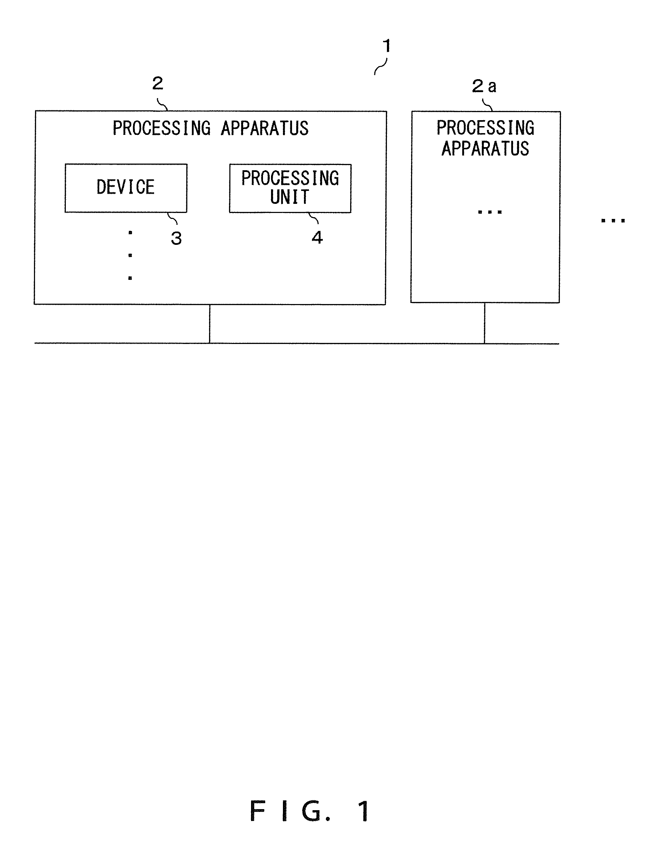

FIG. 1 illustrates an example of an information processing system in accordance with the embodiment. An information processing system 1 is made to be redundant by a plurality of processing apparatuses 2 so that the information processing system 1 can continue a task even when any of the processing apparatuses fails. The processing apparatus 2 includes a device 3 and a processing unit 4. The device 3 corresponds to a functional block, such as a frontend (FE) 14, an FE relay device 15, a controlling unit 16, a memory 17 or 20, a state managing unit 18, a backend (BE) 22, or a BE relay device 21 of the embodiment.

The processing unit 4 detects an abnormality in a device or an abnormality between devices. The processing unit 4 counts the number of abnormalities detected in the device 3. When the counted number abnormalities detected in the device is equal to or greater than a threshold, the processing unit 4 logically separates the device from the information processing system. The logical separating includes, for example, stopping an operation of the device, disconnecting a communication with the device, and turning off the device. The processing unit 4 corresponds to, for example, the state managing unit 18 of the embodiment.

In such a configuration, a device to be logically separated from the system is specified according to a past-fault condition (fault history), thereby decreasing the number of portions to be separated, with the result that the availability of the information processing system can be improved.

When the counted number of abnormalities detected in the device 3 is less than the threshold, the processing unit 4 performs reboot of the device 3.

The processing unit 4 obtains, from another processing apparatus 2a, operation status information related to an operation status of a device 3 of the other processing apparatus 2a. According to the operation status information, the processing unit 4 determines whether the redundant state of devices is achieved when the device 3 is logically separated. According to the result of the determination, the processing unit 4 adjusts the threshold regarding the number of abnormalities related to the device 3.

Such a configuration allows the threshold to be adjusted in accordance with whether the devices are in the redundant state.

When the redundant state of the devices 3 is not achieved due to the logical separating of a device 3, the processing unit 4 sets a threshold that is higher than a threshold that is set when the redundant state of the devices 3 is achieved.

In such a configuration, when the redundant state of the devices 3 is not achieved due to the logical separating of a device 3, a high threshold may be set to give priority to the system operation over the separating.

When detecting an abnormality between the devices, the processing unit 4 reboots a device 3 present between the devices 3. When the processing unit 4 does not detect an abnormality within a predetermined time period, the processing unit 4 specifies the rebooted device 3 as a fault portion. Meanwhile, when the processing unit 4 detects again an abnormality between the devices 3 within a predetermined time period, the processing unit 4 reboots a device of the devices 3 that is different from the previously rebooted device. When the processing unit 4 does not detect an abnormality within a predetermined time period, the processing unit 4 specifies the rebooted device as a fault portion. The processing unit 4 counts this fault portion as an abnormality in the device specified as a fault portion.

Such a configuration allows a point between pathways (between devices) at which an abnormality has occurred to be localized and specified.

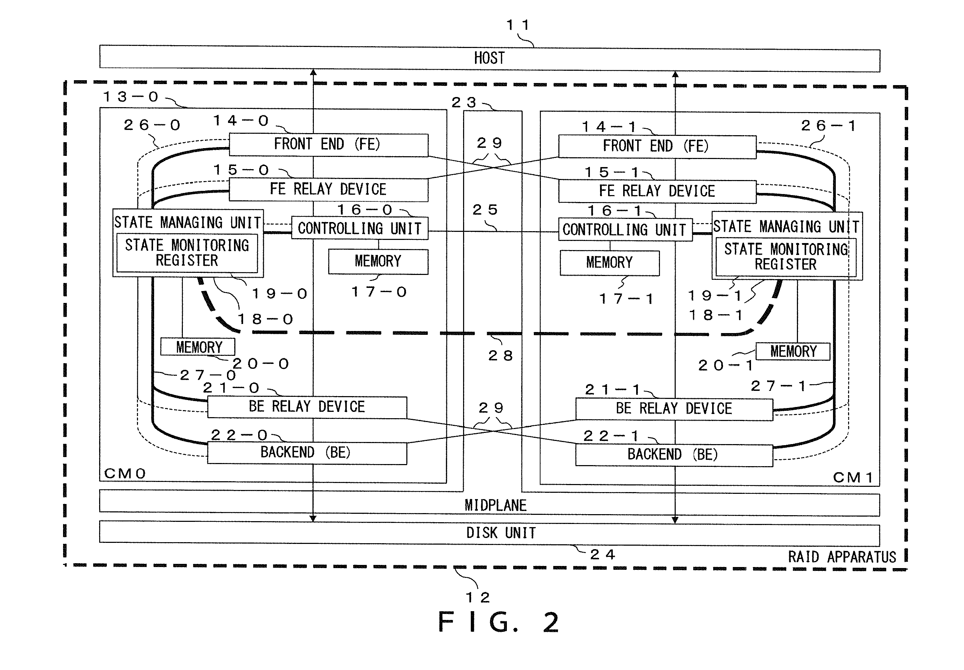

FIG. 2 illustrates an exemplary configuration of a storage system in accordance with the embodiment. The storage system includes a host 11 and a storage apparatus (RAID apparatus) 12. The host 11 is a host apparatus such as a server connected to the RAID apparatus.

The RAID apparatus 12 includes a plurality of controller modules (CMs) 13 (13-0, 13-1), a midplane 23, and a disk unit 24. The disk unit 24 includes storage devices such as a plurality of HDDs (Hard Disk Drives) and SSDs (Solid State Drives). The CM 13 (13-0, 13-1), which is a controller module to write to the disk unit 24 data transmitted from the host 11 and to read data from the disk unit 24 at a request from the host 11, controls an operation of the disk unit 24. The RAID apparatus 12 includes two or more CMs 13 so as to secure redundancy. Note that one of the CMs 13 is indicated as a CM 0 (13-0), i.e., an own-system CM, and the other CM is indicated as a CM 1 (13-1), i.e., an other-system CM.

The CMs 13 (CM 0, CM 1) include functional blocks such as the frontend (FE) 14, the FE relay device 15, the controlling unit 16, the memories 17 and 20, the state managing unit 18, the backend (BE) 22, and the BE relay device 21. In particular, the CM 0 (13-0) includes an FE 14-0, an FE relay device 15-0, a controlling unit 16-0, memories 17-0 and 20-0, a state managing unit 18-0, a BE 22-0, and a BE relay device 21-0. Similarly, the CM 1 (13-1) includes an FE 14-1, an FE relay device 15-1, a controlling unit 16-1, memories 17-1 and 20-1, a state managing unit 18-1, a BE 22-1, and a BE relay device 21-1.

"-0" is added to the right of the reference codes of the elements related to the CM 0, and "-1" is added to the right of the reference codes of the elements related to the CM 1. Matters common to the CM 0 and the CM 1 will be described without adding "-0" or "-1" to the right of the reference codes.

The FE 14, the FE relay device 15, the controlling unit 16, the memories 17 and 20, the state managing unit 18, the BE 22, and the BE relay device 21 are connected via an internal bus.

The FE 14 (host port connecting unit) indicates an interface connected to the host 11 and to a circuit peripheral to the interface. The BE (disk connecting unit) indicates an interface connected to the disk unit 24 within the RAID apparatus 12 and to a circuit peripheral to the interface.

The FE relay device 15 and the BE relay device 21 indicate, for example, devices such as PCI express switches. In some cases, depending on a system, the FE relay device 15 and the BE relay device 21 are not mounted. In this case, the FE may be directly connected to the controlling unit, and the BE may be directly connected to the controlling unit.

The FE (, which may include the FE relay device) 14 and the BE (, which may include the BE relay device) 22 are mounted in the CM 13, but, depending on a system configuration, the FE 14 and the BE 22 may be individually detachable from the CM 13. In such a system configuration, a controlling-unit-mounting board will be indicated as a "CM body". The controlling unit 16 includes, for example, a CPU and a chipset and controls the entirety of the CM 13. A communication bus (not illustrated) is also provided between the controlling unit 16 and the state managing unit 18.

The state managing unit 18 manages the states of configuration units (functional blocks) within the own-system CM 13 in a unified way (first function). The state managing unit 18 may use, for example, a programmable device such as a programmable logic device (PLD) or a field-programmable gate array. Information managed by the state managing unit 18 is shared between the two CMs. In particular, the state managing unit 18 monitors the state of each functional block by polling the functional blocks within the own-system CM 13. The state managing unit 18 includes a state monitoring register 19. The state monitoring register 19 stores information related to the state of each functional block within both of the CMs 13.

The state managing unit 18 receives from each functional block within the own-system CM a failure report that reports a failed portion and, in accordance with the failure report, performs a recovery process (i.e., a reboot process or a process for the separation from the system) on the failed functional block (second function). A thin dashed line 26 (26-0, 26-1) indicates a reboot signal transmitted from the state managing unit 18 to a failed functional block. The process of separating a functional block from the system corresponds to logically separating a functional block from the system, and such a process includes, for example, stopping an operation of the functional block, disconnecting a communication with the functional block, and turning off the functional block. This disables the controlling unit from recognizing the functional block as an element of the system.

In addition, the state managing unit 18 reports the rebooting of the functional block or the separating of functional block from the system to another functional block connected to the functional block. Upon receipt of the report, for a port for connection to the functional block rebooted or separated from the system, each functional block masks or disables a timeout setting for the latency of a response corresponding to a request.

The state managing unit 18 also reports the completion of the reboot or the cancellation of the separation from the system to the functional block connected to the functional block that has been rebooted or separated. Upon receipt of the report of the reboot or the cancellation of the separation, each functional block cancels the masking of the timeout setting for the connection port or enables the connection port.

The state managing unit 18 also reboots the state managing unit 18 of the other-system CM 13. To improve the availability, the state managing unit 18 references past-fault history when a fault occurs and attempts to perform rebooting (repair of an intermittent failure) when the functional block does not have past-fault history.

The state managing unit 18 narrows down portions that have been possibly failed (third function). When the state managing unit 18 cannot specify a failed portion using the failure report received from each functional block due to, for example, a fault on a pathway connecting functional blocks, the state managing unit 18 diagnoses suspicious portions so as to narrow down the possibly failed portions. Upon specifying the failed portion, the state managing unit 18 reboots or separates the failed functional block from the system. In this way, the state managing unit 18 identifies the suspicious portion in order to minimize the number of blocks to be separated when a fault occurs in a pathway.

The state managing unit 18 controls a threshold intended to determine an abnormality occurrence detected by the time when the portion at which an abnormality has occurred is separated (fourth function). In a system that secures redundancy therewithin, such as the RAID apparatus 12, the following control may be performed. That is, control may be performed such that "when an abnormality occurs while redundancy is maintained, an abnormal portion is immediately separated to recover the system early; when the configuration lacks redundancy due to a failure, separating is no longer performed to prevent system down". To achieve this, for the threshold intended to determine an abnormality occurrence detected by the time when each functional block is separated, the state managing unit 18 has two values, one of which corresponds to the case where redundancy is maintained (redundancy-maintained time) and the other of which corresponds to the case where redundancy is lost due to a failure (no-redundancy-maintained time). Upon receipt of the report of a failed portion, in accordance with whether the failed functional block maintains redundancy, the state managing unit 18 determines which of rebooting or separating is to be performed and performs rebooting or separating according to the threshold. That is, when some functional blocks of the other-system CM are separated, the state managing unit 18 changes the threshold intended to determine the abnormality occurrence for the corresponding blocks of the own-system CM into the value corresponding to a setting for the no-redundancy-maintained time. Meanwhile, when an abnormality in a functional block of the other-system CM is repaired, the state managing unit 18 changes the threshold intended to determine the abnormality occurrence for the corresponding block of the own-system CM back into the value corresponding to a setting for the redundancy-maintained time. The fourth function may be achieved via the CMs sharing information on the states of the insides of the CMs obtained by the first function.

The memories 17 and 20 are devices that record information, e.g., ROMs (Read Only Memory) or RAMs (Random Access Memory). The memory 20 stores separation thresholds for each functional block, and, for each functional block, the thresholds include the two values, a threshold that is set at a redundancy-maintained time and threshold that is set at a no-redundancy-maintained time.

The midplane 23 is a board that relays data transmitted between the CMs 13 (CM 0-CM 1) or data transmitted between the CMs 13 and the disk unit 24.

A communication line 25 communicably connects the CMs 13 (CM 0-CM 1) to each other. Communication lines 29 cause packets to migrate (to take a detour) from one functional block to another functional block when the one functional bock fails. Pathways 27 (bold solid lines) indicate pathways through which a packet for state check provided by the state managing unit 18 is transmitted to each functional block within CMs 13. A pathway 28 (a thick dashed line) indicates a pathway that allows the state managing unit 18 of the CMs 13 to share information collected at the pathways 27. Information obtained at the pathways 27 and 28 is stored in the state monitoring registers 19 of the CM 0 and the CM 1.

Next, operations of the embodiment will be described. First, for the pathway 27, descriptions will be given of a situation in which the state managing unit 18 serves as a master (the state managing unit 18 actively conducts a state check). The state managing unit 18 transmits a state check packet (command) to each functional block within the own-system CM 13 via polling. Receiving a state monitoring command, each functional block transmits state information of itself (presence/absence of an error occurrence within the functional block itself) to the state managing unit 18. The state managing unit 18 stores in the state monitoring registers 19 the state information received from each functional block. When the state information received from each functional block includes a fatal error, the state managing unit 18 identifies and separates the fault portion. A rule to judge which portion to be a portion suspected to have failed in accordance with a functional block for which an error has been reported is set in the state managing unit 18 in advance. When a received packet has an abnormality (abnormalities in a packet header and a packet end, parity abnormality), the receiving side requests re-transmission from the transmitting side. When a response is not received from the functional block for a certain period of time, the state managing unit 18 judges the functional block to be abnormal and separates this functional block.

Next, for the pathway 27, descriptions will be given of a situation in which each functional block serves as a master (the state managing unit 18 actively conducts a state check, i.e., each functional block reports, to the state managing unit 18, state information indicating that the functional block is in an abnormal state). When a fatal error occurs, each functional block transmits an error report packet (command). The state managing unit 18 stores in the state monitoring register 19 the state information received from each functional block. The state managing unit 18 identifies and separates the fault portion from the system. When the received packet includes an abnormality, the state managing unit 18 also determines that a functional block of the transmitting side includes an abnormality and separates this functional block from the system. When a received packet includes an abnormality, the state managing unit 18 may request re-transmission, and then, when the received packet again includes an abnormality, the state managing unit 18 may determine that a functional block of the transmitting side includes an abnormality and may separate this functional block from the system.

The following will describe a determination method for a reboot process and a separation process. The state managing unit 18 manages fault history for each functional block. Even when an abnormality occurs in a functional block, as long as a fault has never occurred in the functional block, the state managing unit 18 gives a reboot instruction. When history indicates that a fault occurred in the functional block in the past, the state managing unit 18 gives an instruction to separate the functional block from the system. A threshold, i.e., the maximum number of faults detected before the separating from the system is performed, may be freely designed.

In the performing of the process of separating from the system when a controlling unit is included in a portion suspected to have failed, the state managing unit 18 checks the abnormal portion for the controlling unit last of all. In the separating of a predetermined functional block from the system, the state managing unit 18 sends in advance the report to a functional block connected to the functional block to be separated. The report is sent to a functional block connected to the functional block to be separated (adjacent block) in advance to prevent the adjacent block from detecting an unexpected error due to the sudden separation. For example, the adjacent block is disabled from using a connection port in order to prevent an I/O error from being detected due to sudden interruption of an ongoing input-output (I/O) process.

The following will describe the pathway 28. The state managing units 18-0 and 18-1 periodically communicate with each other to share information of the state monitoring registers 19. The state managing unit 18 stores data received from a communications partner in the state monitoring register 19 thereof. When the communications partner makes no response to the communication for a certain time period, the state managing unit 18 determines that an abnormality has occurred in the communications partner and performs the reboot process on the communications partner.

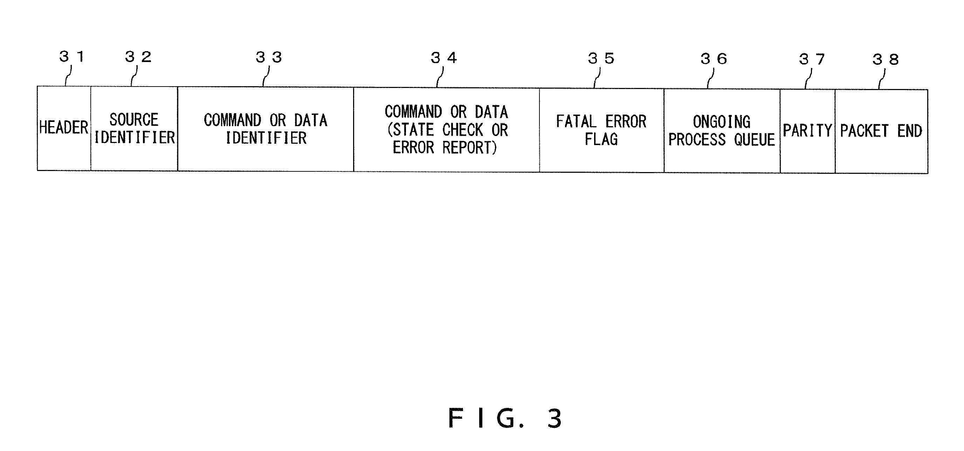

FIG. 3 illustrates an example of a state check packet in accordance with the embodiment. The state check packet includes data items such as a "header" 31, a "source identifier" 32, a "command or data identifier" 33, a "command or data (state check or error report)" 34, a "fatal error flag" 35, an "ongoing process queue ID" 36, a "parity" 37, and a "packet end" 38. As an example, in the embodiment, the state check packet includes the "ongoing process queue ID" 36, the "parity" 37, and the "packet end" 38, and these data items are set in accordance with a specification. Hence, depending on the specification, the state check packet may lack the "ongoing process queue ID" 36, the "parity" 37, and the "packet end" 38 or may include some of these data items.

The "header" 31 stores header information used in a predetermined communication protocol to transmit or receive a state check packet. A unique identifier assigned to a functional block that has transmitted the packet is set as the "source identifier" 32. Information to determine which of a command and data the packet is is set as the "command or data identifier" 33.

A command (state check from the state managing unit 18 or error report from each functional block) or data (presence/absence of error occurrence) is set as the "command or data (state check or error report)" 34.

The "fatal error flag" 35 stores flag information indicating whether a fatal error has occurred. The following will describe a fatal error. A non-fatal error is, for example, an error that is acceptable, as long as the number of times this error occurs per unit time is less than a specified value. A fatal error is an irreparable error or an error that occurs, per unit time, as many times as the number indicated by a specified value or a greater number of times than the number indicated by the specified value. When a fatal error occurs, the error information is reported to the state managing unit 18.

The "ongoing process queue ID" 36 stores the ID of a queue that is being processed by each functional block. When the ID of the queue consecutively becomes the same ID (not updated) a certain number of times or greater times, the state managing unit 18 determines that the functional block has been subject to processing delay (congestion) and separates this functional block from the system. This prevents the influence on a device communicating with the device above (abnormality spread).

The "parity" 37 stores information for a parity check. The "packet end" 38 stores information indicating a backend of the packet.

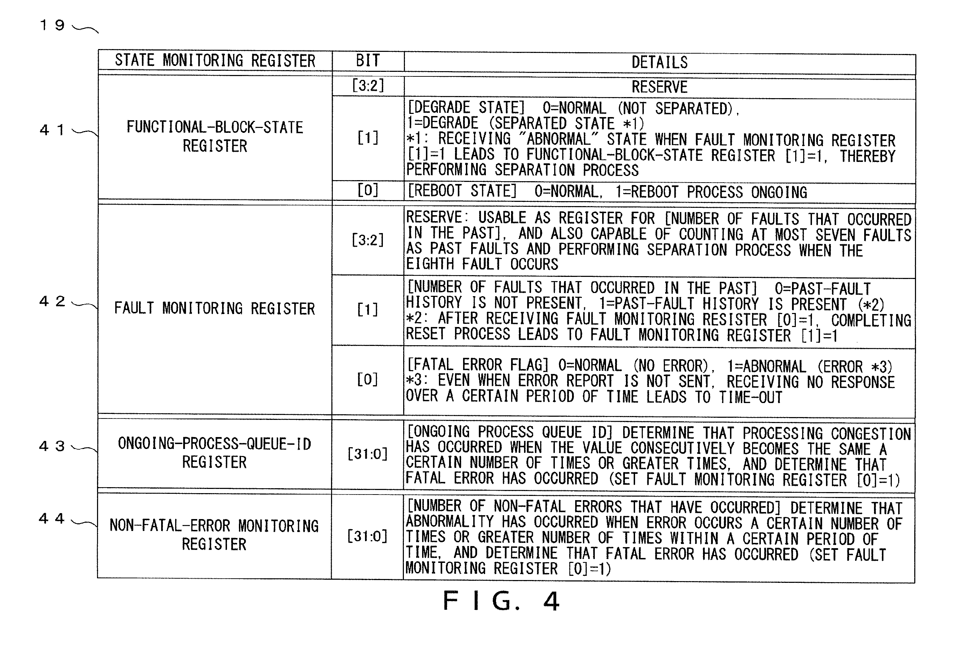

FIG. 4 illustrates state monitoring registers in accordance with the embodiment. The state monitoring register 19 stores information received via the pathway 27 and the pathway 28. That is, at each CM 13, the state monitoring register 19 stores information on each functional block of the CM 0 and the CM 1.

In the embodiment, the state monitoring register 19 includes a functional-block-state register 41, a fault monitoring register 42, an ongoing-process-queue-ID register 43, and a non-fatal-error monitoring register 44, each corresponding to a functional block. The bit lengths of the registers, which will be described hereinafter, are examples and are freely changeable in accordance with a specification.

The functional-block-state register 41 is formed of the four bits: a "reboot state" (0th bit), a "degrade state" (1st bit), a "reserve" (2nd and 3rd bits).

The "reboot state" (0th bit) stores "0"=normal or "1"=reboot-process ongoing.

The "degrade state" (1st bit) stores "0"=normal (or not separated) or "1"=degrade (separated state). When the "degrade state"="1" and the fault monitoring register [1st bit] -"1", receiving a report indicating an "abnormality" state leads to a functional-block-state register [1st bit]="1", causing the state managing unit 18 to perform the separation process.

The "reserve" (2nd and 3rd bits) is a spare bit region.

The fault monitoring register 42 is formed of the four bits: a "fatal error flag" (0th bit), a "number of faults that occurred in the past" (1st bit), and a "reserve" (2nd and 3rd bits).

The "fatal error flag" (0th bit) stores "0"=normal (no error) or "1"=abnormal. Even when a report indicating an "abnormal" state is not received, receiving no response over a certain period of time leads to time-out. In this case, the state managing unit 18 determines that an abnormality has occurred and updates the data item to the "fatal error flag"=1 (abnormal).

The "number of faults that occurred in the past" (1st bit) stores "0" (past-fault history is not present) or "1" (past-fault history is present). After a state check packet of the "fatal error flag"="1" is received, completing the reboot process causes the state managing unit 18 to update the data item to the "number of faults that occurred in the past"="1".

The "reserve" (2nd and 3rd bits), which is a spare bit region, may be used as, for example, a register for the "number of faults that occurred in the past". In this case, three bits may be used as the register for the "number of faults that occurred in the past". Accordingly, the state managing unit 18 may count at most seven past faults and may perform the separation process when an eighth fault occurs.

The table of the state monitoring register 19 may be determined in advance in the designing of the system but can be generated using configuration information collected during the starting of the system. In the case of the table generated using configuration information collected during the starting of the system, a functional block newly added after the designing of the system can be monitored using the state monitoring register 19 and can have the reboot process and the separation process performed thereon.

The ongoing-process-queue-ID register 43 includes a data item indicated by an "ongoing process queue ID" of 32 bits (0th to 31st bits). In the present embodiment, 32 bits are used as an example of the "ongoing process queue ID", but the bit number is not limited to this. The bit number may be, for example, about 12 bits or may be freely designed in accordance with a specification. When the value of the "ongoing process queue ID" consecutively becomes the same value a certain number of times or greater times, the state managing unit 18 determines that processing congestion has occurred and that a fatal error has occurred, thereby setting the status monitoring register [0]=1.

The non-fatal-error monitoring register 44 includes a data item indicated by a "number of non-fatal errors that have occurred" of 32 bits (0th to 31st bits). In the present embodiment, 32 bits are used as an example of the "number of non-fatal errors that have occurred", but the bit number is not limited to this. The bit number may be, for example, about 12 bits. The "number of non-fatal errors that have occured" stores the number of occurrences of a non-fatal error. The state managing unit 18 determines that an abnormality has occurred when a non-fatal error occurs a certain number of times or greater times within a certain time period. In this case, the state managing unit 18 determines that a fatal error has occurred and sets the fault monitoring register [0]=1.

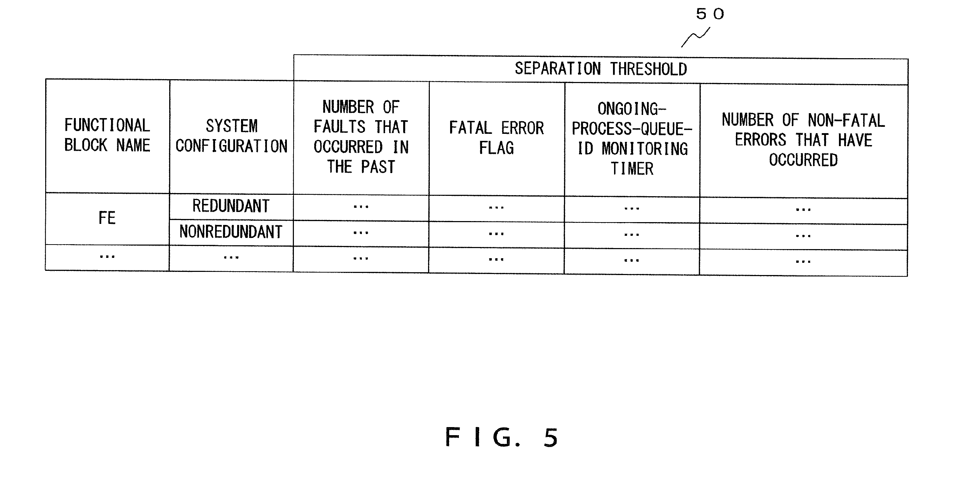

FIG. 5 illustrates an example of a separation-threshold storing table for functional blocks in accordance with the embodiment. A separation-threshold storing table 50 is stored in the memory 20, and the separation-threshold storing table 50 holds two values as separation thresholds for each functional block, one of which is for a system with a redundant configuration and the other is for a system with a nonredundant configuration. These thresholds define a separation threshold count and define whether to perform separating according to the "number of faults that occurred in the past", the "fatal error flag", and the "ongoing-process-queue-ID monitoring timer" of the state monitoring register 19. In addition, according to the "number of non-fatal errors that have occurred" of the state monitoring register 19, these thresholds define the number of separation thresholds and define whether to perform separating.

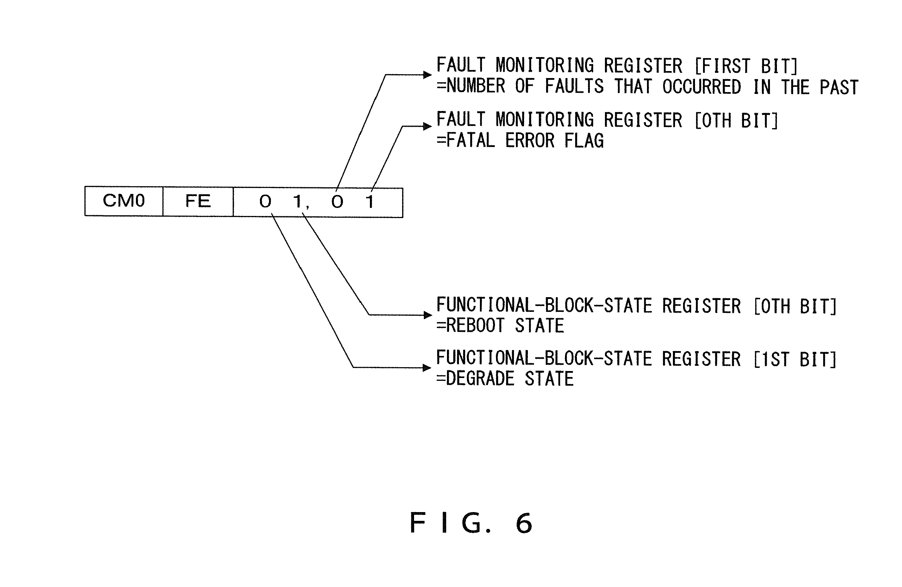

FIG. 6 illustrates notations for state monitoring registers in accordance with the embodiment. The following will describe the notation of the state monitoring register, which is used in the flow described hereinafter. The state monitoring register indicates a "CM name", a "functional-block name", and a "state-monitoring-register value" starting from the left. The "state-monitoring-register value" is indicated as "functional-block-state register [1:0], fault-monitoring register [1:0]". The functional-block-state register [1:0] indicates the 1st bit ([degrade state]) and the 0th bit ([reboot state]) of the functional-block-state register. The fault monitoring register [1:0] indicates the 1st bit ([number of faults that occurred in the past]) and the 0th bit ([fatal error flag]) of the fault monitoring register. A hatching portion indicates a register to be checked or updated in the operation at that moment.

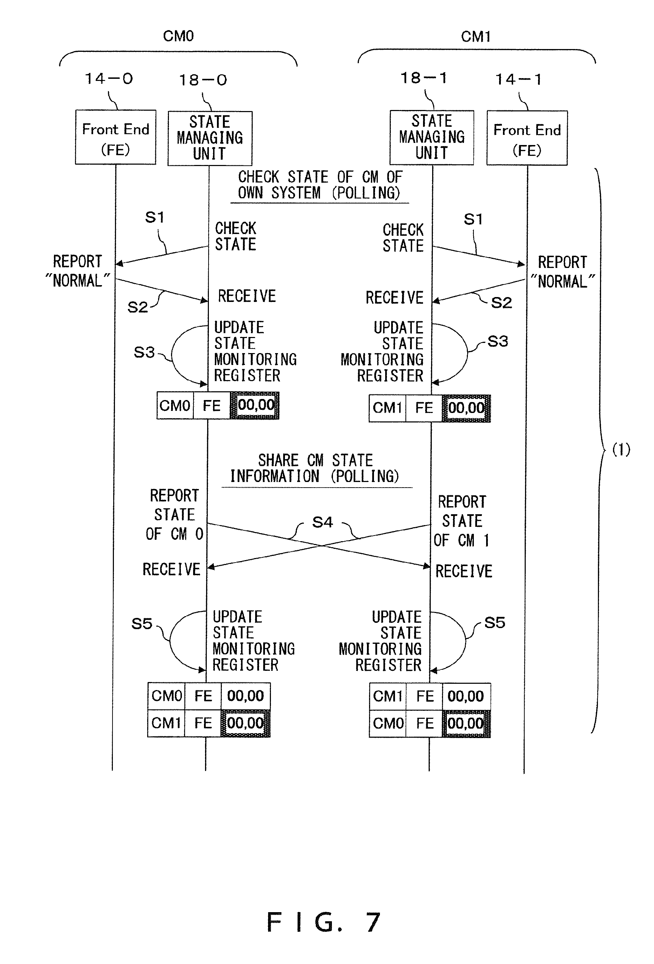

With reference to FIG. 7 to FIG. 15, the following will describe operations between CMs performed in various situations. In FIG. 7 to FIG. 15, numerals (1) to (4) correspond to the first to the fourth functions described above, respectively.

FIG. 7 illustrates exemplary flows of operations performed by CMs during normal time in accordance with the embodiment. The state managing units 18-0 and 18-1 of the CMs transmit a state check packet to each functional block of the own system via polling so as to check the state of the functional block (S1). The flow of FIG. 7 will be described with reference to the example of the frontend (FE) 14.

Responsively, the FE 14 transmits a state check packet indicating "normal" (S2). The state managing unit 18 receives the state check packet transmitted from the FE 14 and updates the state monitoring register 19 using the state check packet (S3). Accordingly, the state-monitoring-register values of the state monitoring registers 19 for the FEs 14 of the CM 0 and the CM 1 are updated to (functional-block-state register [1:0], fault monitoring register [1:0])=(00, 00).

Then, the state managing units 18-0 and 18-1 perform polling and transmit information of the state monitoring register (CM state information) to each other so as to share CM state information (S4). Upon receipt of the CM state information of the communications partner, the state managing units 18 each update the state monitoring register 19 using the CM state information (S5). Accordingly, in the CM 0, the state-monitoring-register value for the FE of the CM 1 is updated to (functional-block-state register [1:0], fault monitoring register [1:0])=(00, 00). In the CM 1, the state-monitoring-register value for the FE of the CM 0 is updated to (functional-block-state register [1:0], fault monitoring register [1:0])=(00, 00).

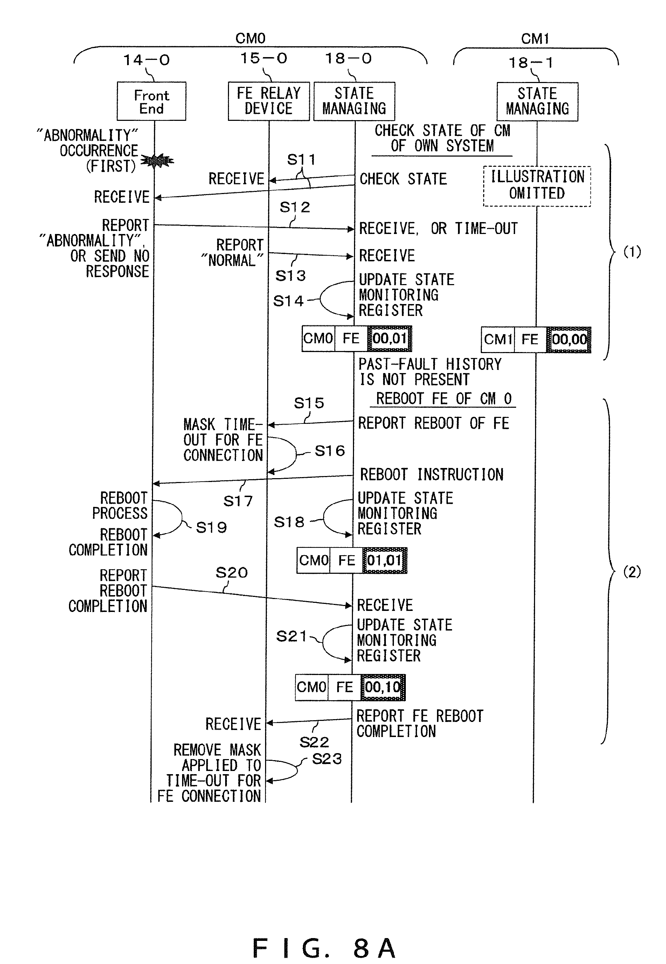

FIG. 8A to FIG. 8C illustrate exemplary flows of a separating operation in accordance with the embodiment performed when an abnormality (not fault in a pathway) occurs in one system of a pair of systems. FIG. 8A to FIG. 8C will be described with reference to an exemplary situation in which an abnormality has occurred on the FE side or the FE-relay-device side, but descriptions would be similar for a situation in which an abnormality has occurred on the BE side or the BE-relay-device side.

The state managing unit 18-0 transmits a state check packet to each functional block of the own system via polling so as to check the state of the functional block (the FE 14-0, the FE relay device 15-0) (S11). An abnormality has occurred in the FE 14-0 of the CM 0, and hence the FE 14-0 transmits a state check packet indicating an abnormality occurrence or is unable to send a response (S12). Alternatively, when the FE 14-0 is able to perform an abnormality interrupt, the FE 14-0 may report the abnormality interrupt to the state managing unit 18-0.

When the state managing unit 18-0 receives a state check packet indicating an abnormality occurrence from the FE 14-0 as a result of the polling or when a response-waiting time has elapsed (time-out), the state managing unit 18-0 determines that an abnormality has occurred. When an abnormality interrupt is reported, the state managing unit 18-0 determines that an abnormality has occurred.

The state managing unit 18-0 receives from the FE relay device 15-0 a state check packet indicating that the state is normal (S13).

The state managing unit 18-0 updates the state monitoring register 19 using the result of polling (S14). Accordingly, the state-monitoring-register value of the state monitoring register 19 for the FE 14-0 of the CM 0 is updated to (functional-block-state register [1:0], fault monitoring register [1:0])=(00, 01).

The state managing unit 18-0 reports to the FE relay device 15-0 that the FE 14-0 is to be rebooted (S15). Upon receipt of the report from the state managing unit 18-0, the FE relay device 15-0 masks a function to trigger time-out when a response-waiting time has elapsed for the FE 14-0, or disconnects a pathway to the FE 14-0 (S16).

The state managing unit 18 gives a reboot instruction to the FE 14-0 (S17) and updates the state monitoring register 19 for the FE 14-0 (S21). Accordingly, the state-monitoring-register value of the state monitoring register 19 for the FE 14-0 of the CM 0 is updated to (functional-block-state register [1:0], fault monitoring register [1:0])=(01, 01).

At the FE 14-0, reboot is performed when a reboot instruction is received from the state managing unit 18-0 (S19). When reboot is completed, the FE 14-0 reports a reboot completion to the state managing unit 18 (S20).

Upon receipt of the report of a reboot completion from the FE 14-0, the state managing unit 18-0 updates the state monitoring register for the FE 14-0 (S18). Accordingly, the state-monitoring-register value of the state monitoring register 19 for the FE of the CM 0 is updated to (functional-block-state register [1:0], fault monitoring register [1:0])=(00, 10) (S21).

Then, the state managing unit 18-0 reports to the FE relay device 15-0 that the reboot of the FE 14-0 has been completed (S22). The FE relay device 15-0 receives from the state managing unit 18 the report indicating that the reboot of the FE 14-0 has been completed. Accordingly, the FE relay device 15-0 removes the mask applied to the function to trigger time-out when a response-waiting time has elapsed for the FE 14-0, or connects (opens) the pathway to the FE 14-0 (S23).

Then, the state managing units 18-0 and 18-1 perform polling and transmit information of the state monitoring register (CM state information) to each other so as to share CM state information (S24). Upon receipt of the CM state information of the communications partner, the state managing units 18 each update the state monitoring register 19 thereof using the CM state information (S25). Accordingly, in the CM 0, the state-monitoring-register value for the FE 14-1 of the CM 1 is updated to (functional-block-state register [1:0], fault monitoring register [1:0])=(00, 00). In the CM 1, the state-monitoring-register value for the FE 14-0 of the CM 0 is updated to (functional-block-state register [1:0], fault monitoring register [1:0])=(00, 10).

Assume that, afterwards, an abnormality occurs again in the FE 14-0. The state managing unit 18-0 transmits a state check packet to each functional block of the own system via polling so as to check the state of the functional block (the FE 14-0, the FE relay device 15-0) (S26). An abnormality has occurred in the FE 14-0, and hence the FE 14-0 transmits a state check packet indicating an abnormality occurrence or is unable to send a response (S27). Alternatively, when the FE 14-0 is able to perform an abnormality interrupt, the FE 14-0 may report the abnormality interrupt to the state managing unit 18-0.

When the state managing unit 18-0 receives a state check packet indicating an abnormality occurrence from the FE 14-0 as a result of the polling or when a response-waiting time has elapsed (time-out), the state managing unit 18-0 determines that an abnormality has occurred. When an abnormality interrupt is reported, the state managing unit 18-0 determines that an abnormality has occurred.

The state managing unit 18-0 receives from the FE relay device 15-0 a state check packet indicating that the state is normal (S28).

The state managing unit 18-0 updates the state monitoring register 19 using the result of polling (S29). In this example, a state check packet indicating an abnormality occurrence is received from the FE 14-0 or an abnormality is judged to have occurred regarding the FE 14-0, and hence "1" is set as the "fatal error flag" of the fault monitoring register for the FE 14-0 of the CM 0. That is, the state-monitoring-register value of the state monitoring register 19 for the FE 14-0 of the CM 0 is updated to (functional-block-state register [1:0], fault monitoring register [1:0])=(00, 11).

In addition, since an abnormality has occurred in the FE with "1" set as the "number of faults that occurred in the past" of the fault monitoring register for the FE 14-0 of the CM 0, the state managing unit 18-0 updates the state monitoring register 19 (S30). Accordingly, the state-monitoring-register value of the state monitoring register 19 for the FE 14-0 of the CM 0 is updated to (functional-block-state register [1:0], fault monitoring register [1:0])=(10, 00).

The state managing unit 18-0 reports to the state managing unit 18-1 that the FE 14-0 is to be separated from the CM 0 (S31) .

Then, the state managing units 18-0 and 18-1 perform polling and transmit information of the state monitoring register (CM state information) to each other so as to share CM state information (S32). Upon receipt of the CM state information of the communications partner, the state managing units 18 each update the state monitoring register 19 using the CM state information (S33). Accordingly, in the CM 0, the state-monitoring-register value for the FE 14-1 of the CM 1 is updated to (functional-block-state register [1:0], fault monitoring register [1:0])=(00, 00). In the CM 1, the state-monitoring-register value for the FE 14-0 of the CM 0 is updated to (functional-block-state register [1:0], fault monitoring register [1:0])=(10, 00).

The state managing unit 18-0 reports to the FE relay device 15-0 that the FE 14-0 is to be separated (S34). Upon receipt of the report from the state managing unit 18-0 that the FE is to be separated, the FE relay device 15-0 disconnects a pathway connected to the FE (S35).

The state managing unit 18-1 reads an FE separation threshold for the no-redundancy-maintained time from the separation-threshold storing table 50 and sets this threshold at a predetermined storage region within the state managing unit 18-1 (S36). The state managing unit 18-1 instructs the controlling unit 16-1 to take over an operation of the FE 14-0 of the CM 0 (S37). When the operation of the FE 14-0 of the CM 0 has been completely taken over, the controlling unit 16-1 reports the completion to the state managing unit 18-1 (S38). The state managing unit 18-1 reports to the state managing unit 18-0 that the operation of the FE 14-0 of the CM 0 has completely been taken over (S39). The state managing unit 18-0 transmits a reset signal to the FE 14-0 and performs the process of separating the FE 14-0 from the CM 0 (S40).

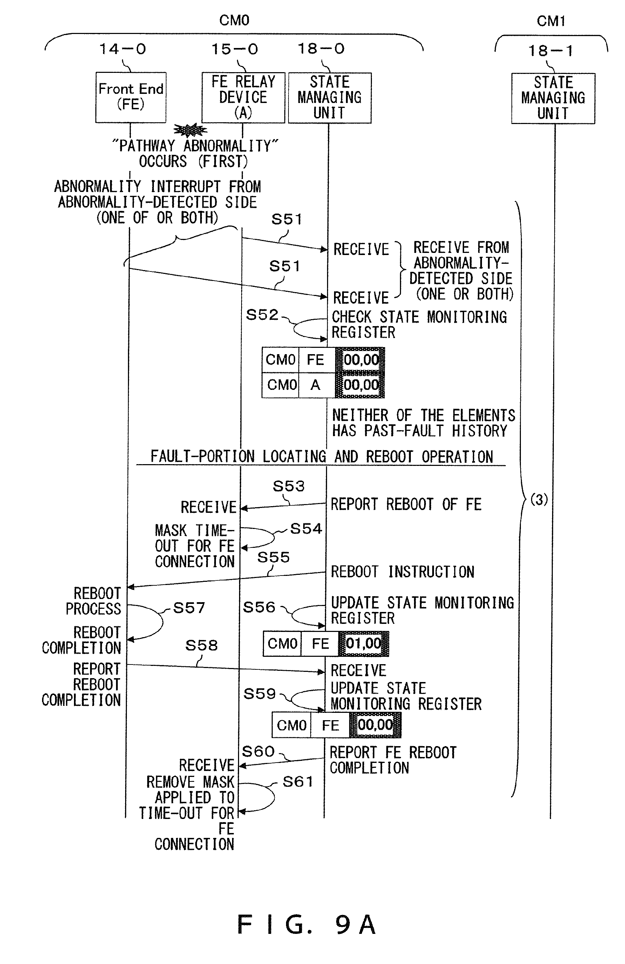

FIG. 9A to FIG. 9C illustrate exemplary flows of a separating operation in accordance with the embodiment performed when a system abnormality (pathway fault) occurs. With reference to FIG. 9A to FIG. 9C, descriptions will be given of an exemplary situation in which an abnormality occurs between an FE and a controlling unit, and, in particular, an exemplary situation will be described in which an abnormality occurs between the FE and the FE relay device of the CM 0; however, the descriptions will be applicable to a situation in which an abnormality occurs between a BE and a controlling unit. The FE relay device is indicated as "A" in FIG. 9A to FIG. 9C.

Assume that a pathway abnormality has occurred at one of or both the FE 14-0 and the FE relay device (A) 15-0 of the CM 0. Then, a functional block of the FE 14-0 or the FE relay device 15-0 at which an abnormality has been detected reports an abnormality interrupt to the state managing unit 18-0 (S51).

Upon receipt of the abnormality interrupt report, the state managing unit 18-0 references the state monitoring register 19 so as to check past-fault history of the functional block (S52) . In this case, the state-monitoring-register values of the state monitoring registers 19 for the FE 14-0 and the FE relay device (A) 15-0 are (functional-block-state register [1:0], fault monitoring register [1:0])=(00, 00), which means that neither of them has past-fault history.

In this case, the state managing unit 18-0 locates the fault portion and performs a reboot operation. First, the state managing unit 18-0 reports to the FE relay device (A) 15-0 that the FE 14-0 is to be rebooted (S53) . Upon receipt of the report from the state managing unit 18-0, the FE relay device 15-0 masks a function to trigger time-out when a response-waiting time has elapsed for the FE 14-0, or disconnects a pathway to the FE 14-0 (S54).

The state managing unit 18-0 gives a reboot instruction to the FE 14-0 (S55) and updates the state monitoring register 19 for the FE 14-0 (S56). Accordingly, the state-monitoring-register value of the state monitoring register 19 for the FE 14-0 of the CM 0 is updated to (functional-block-state register [1:0], fault monitoring register [1:0])=(01, 00).

At the FE 14-0, reboot is performed when a reboot instruction is received from the state managing unit 18-0 (S57). When reboot is completed, the FE 14-0 reports a reboot completion to the state managing unit 18-0 (S58).

Upon receipt of the report of a reboot completion from the FE 14-0, the state managing unit 18-0 updates the state monitoring register for the FE 14-0 (S59). Accordingly, the state-monitoring-register value of the state monitoring register 19 for the FE 14-0 of the CM 0 is updated to (functional-block-state register [1:0], fault monitoring register [1:0])=(00, 00).

The state managing unit 18-0 reports to the FE relay device 15-0 that the reboot of the FE 14-0 has been completed (S60). Upon receipt of the report from the state managing unit 18-0 that the reboot of the FE 14-0 has been completed, the FE relay device 15-0 removes the mask applied to the function to trigger time-out when a response-waiting time has elapsed for the FE 14-0, or connects the pathway to the FE relay 14-0 (S61).

The state managing unit 18-0 checks whether a pathway fault has occurred for a certain time period (S62). That is, the state managing unit 18-0 waits for an abnormality interrupt to be reported for a certain period of time or monitors the result of polling of each functional block for a certain time period. When an abnormality interrupt is not reported during the certain time period (time-out) or an abnormality occurrence is not reported in response to polling during the certain time period, the state managing unit 18-0 determines that a pathway fault has not occurred. In this case, the state managing unit 18-0 determines that the FE 14-0 caused the previous fault and identifies the FE 14-0 as a fault portion.

After the process of S62, tasks may be performed to recover from the fault, or, alternatively, a fault may reoccur. First, descriptions will be given of a situation in which tasks are performed to recover from a fault. The state managing unit 18 updates the state monitoring register 19 for the FE 14-0 in accordance with the result of the identifying in S62 (S63). Accordingly, the state-monitoring-register value of the state monitoring register 19 for the FE 14-0 of the CM 0 is updated to (functional-block-state register [1:0], fault monitoring register [1:0])=(00, 10). The state-monitoring-register value of the state monitoring register 19 for the FE relay device (A) of the CM 0 is updated to (functional-block-state register [1:0], fault monitoring register [1:0])=(00, 00).

Next, descriptions will be given of a situation in which a fault occurs. Assume again that a pathway abnormality has occurred in one of or both the FE 14-0 and the FE relay device (A) 15-0 of the CM 0. Accordingly, a functional block of the FE 14-0 or the FE relay device 15-0 at which an abnormality has been detected reports an abnormality interrupt to the state managing unit 18-0 (the state managing unit 18-0 may detect the abnormality using the result of polling) (S64).

Upon receipt of the abnormality interrupt, the state managing unit 18 reports to the FE 14-0 that the FE relay device (A) is to be rebooted (S65). Upon receipt of the report from the state managing unit 18-0, the FE 14-0 masks a function to trigger time-out when a response-waiting time has elapsed for the FE relay device (A) 15-0, or disconnects a pathway connected to the FE 14-0 (S66).

The state managing unit 18-0 gives a reboot instruction to the FE relay device (A) 15-0 (S67) and updates the state monitoring register 19 for the FE relay device (A) 15-0 (S68). Accordingly, the state-monitoring-register value of the state monitoring register 19 for the FE relay device (A) 15-0 of the CM 0 is updated to (functional-block-state register [1:0], fault monitoring register [1:0])=(01, 00).

At the FE relay device (A) 15-0, reboot is performed when a reboot instruction is received from the state managing unit 18-0 (S69). When reboot is completed, the FE relay device (A) 15-0 reports a reboot completion to the state managing unit 18-0 (S70).

Upon receipt of the report of a reboot completion from the FE relay device (A) 15-0, the state managing unit 18-0 updates the state monitoring register 19 for the FE relay device (A) 15-0 (S71). Accordingly, the state-monitoring-register value of the state monitoring register 19 for the FE relay device (A) 15-0 of the CM 0 is updated to (functional-block-state register [1:0], fault monitoring register [1:0])=(00, 00).

The state managing unit 18-0 reports to the FE 14-0 that the reboot of the FE relay device (A) 15-0 has been completed (S72). The FE 14-0 receives from the state managing unit 18-0 the report indicating that the reboot of the FE relay device (A) 15-0 has been completed. Accordingly, the FE 14-0 removes the mask applied to the function to trigger time-out when a response-waiting time has elapsed for the FE relay device (A) 15-0, or connects the pathway to the FE relay device (A) 15-0 (S73).

The state managing unit 18-0 checks whether a pathway fault has occurred for a certain time period (S74). That is, the state managing unit 18-0 waits for an abnormality interrupt to be reported for a certain time period or monitors the result of polling of each functional block for a certain time period. When an abnormality interrupt is not reported during the certain time period (time-out) or an abnormality occurrence is not reported in response to polling during the certain time period, the state managing unit 18-0 determines that a pathway fault has not occurred. In this case, the state managing unit 18-0 determines that the FE relay device (A) 15-0 caused the previous fault and identifies the FE relay device (A) 15-0 as a fault portion.

The state managing unit 18 updates the state monitoring register 19 for the FE relay device (A) 15-0 in accordance with the result of the identifying in S74 (S75). Accordingly, the state-monitoring-register value of the state monitoring register 19 for the FE relay device (A) 15-0 of the CM 0 is updated to (functional-block-state register [1:0], fault monitoring register [1:0])=(00, 10).

When the failure has not been repaired yet, the state managing unit 18 degrades both the FE and the FE relay device (A). That is, the state managing unit 18 separates both the FE and the FE relay device (A). The procedure is similar to the procedure used to separate an FE.

Next, a situation will be discussed in which the FE 14-0 is a fault portion in an initial fault.

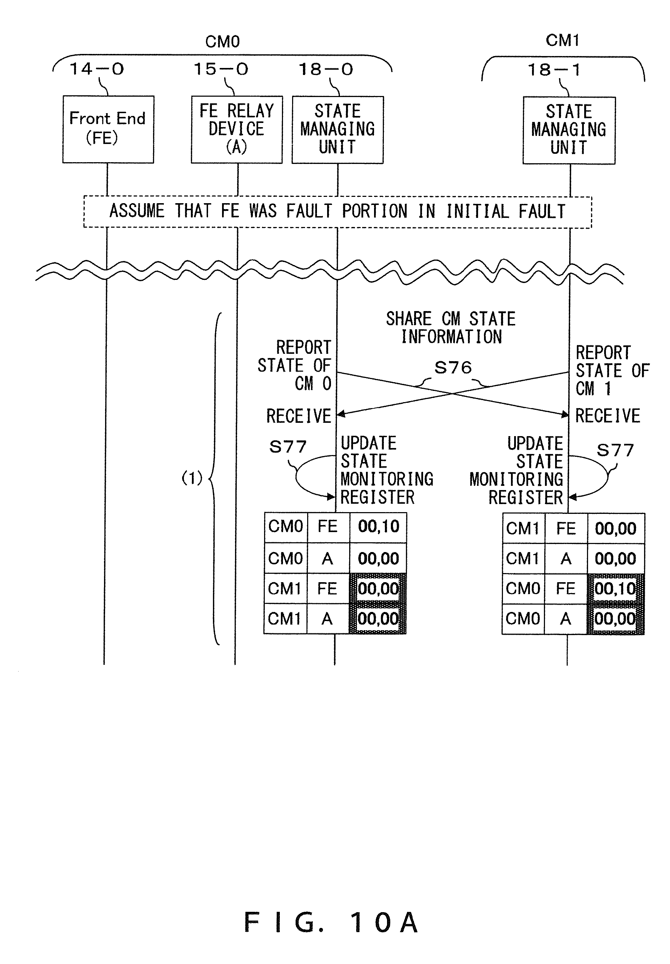

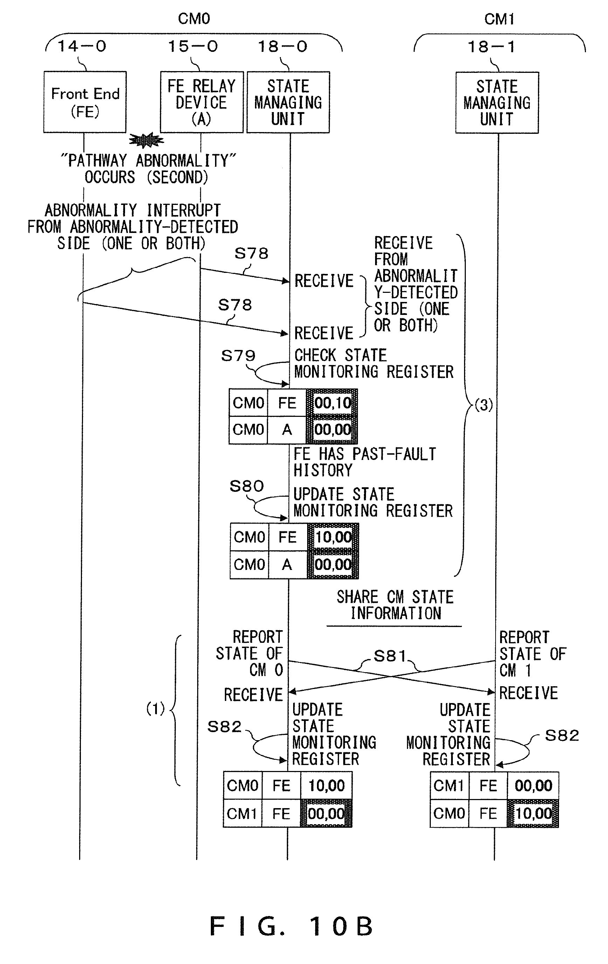

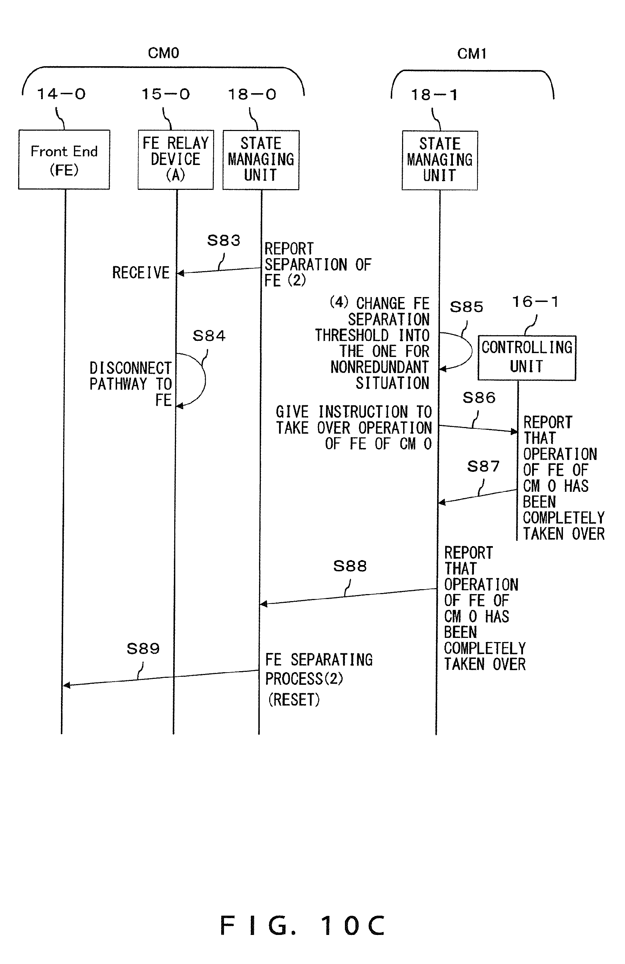

FIG. 10A to FIG. 10C illustrate exemplary flows of a separating operation performed when a system abnormality (pathway fault) occurs in a situation in which an FE is fault portion in an initial fault. An FE relay device is indicated as "A" in FIG. 10A to FIG. 10C.

Then, the state managing unit 18 of the CM 0 and the state managing unit 18 of the CM 1 perform polling and transmit information of the state monitoring register (CM state information) to each other so as to share CM state information (S76). Upon receipt of the CM state information of the communications partner, the state managing units 18 each update the state monitoring register 19 using the CM state information (S77). Accordingly, in the CM 0, the state-monitoring-register value for the FE of the CM 1 is updated to (functional-block-state register [1:0], fault monitoring register [1:0]) =(00, 00). In the CM 0, the state-monitoring-register value for the FE relay device (A) of the CM 1 is updated to (functional-block-state register [1:0], fault monitoring register [1:0])=(00, 00). In the CM 1, the state-monitoring-register value for the FE of the CM 0 is updated to (functional-block-state register [1:0], fault monitoring register [1:0])=(00, 10). In the CM 1, the state-monitoring-register value for the FE relay device (A) of the CM 0 is updated to (functional-block-state register [1:0], fault monitoring register [1:0])=(00, 00).

Assume that a pathway abnormality has occurred again in one of or both the FE 14-0 and the FE relay device (A) 15-0 of the CM 0. Then, a functional block of the FE 14-0 or the FE relay device 15-0 at which the abnormality has been detected reports an abnormality interrupt to the state managing unit 18-0 (S78) .

Upon receipt of the abnormality interrupt report, the state managing unit 18-0 references the "number of faults that occurred in the past" of the fault monitoring register for each functional block so as to check the past-fault history of the functional block (S79). In this example, the state managing unit 18-0 determines that a fault occurred in the past in the FE 14-0.

Accordingly, the state managing unit 18-0 updates the state monitoring register 19 for the FE 14-0 (S80). In this example, since an abnormality interrupt report has been received with "1" set as the "number of faults that occurred in the past" of the fault monitoring register for the FE 14-0 of the CM 0, the state managing unit 18 performs the following process. That is, the state managing unit 18 updates the "degrade state" of the functional-block-state register for the FE 14-0 of the CM 0 to "1" and updates the fault monitoring register [1] to "0".

The state managing unit 18-0 of the CM 0 and the state managing unit 18-1 of the CM 1 perform polling and transmit information of the state monitoring register (CM state information) to each other so as to share CM state information (S81). Upon receipt of the CM state information of the communications partner, the state managing units 18 each update the state monitoring register 19 using the CM state information (S82). Accordingly, in the CM 1, the state-monitoring-register value for the FE 14-0 of the CM 0 is updated to (functional-block-state register [1:0], fault monitoring register [1:0])=(10, 00). In the CM 0, the state-monitoring-register value for the FE 14-0 of the CM 1 is updated to (functional-block-state register [1:0], fault monitoring register [1:0])=(00, 00).

The state managing unit 18-0 of the CM 0 reports to the FE relay device (A) 15-0 that the FE 14-0 is to be separated (S83) . Upon receipt of the report from the state managing unit 18 that the FE 14-0 is to be separated, the FE relay device (A) 15 disconnects a pathway connected to the FE 14-0 (S84).

The state managing unit 18 of the CM 1 reads an FE separation threshold for the no-redundancy-maintained time from the separation-threshold storing table 50 and sets this threshold at a predetermined storage region within the state managing unit 18-1 (S85). The state managing unit 18-1 of the CM 1 instructs the controlling unit 16-1 to take over an operation of the FE 14-0 of the CM 0 (S86). When the operation of the FE 14-0 of the CM 0 has been completely taken over, the controlling unit 16-1 reports the completion to the state managing unit 18-1 (S87). The state managing unit 18-1 reports to the state managing unit 18-0 that the operation of the FE 14-0 of the CM 0 has completely been taken over (S88). The state managing unit 18-0 transmits a reset signal to the FE 14-0 and performs the process of separating the FE 14-0 from the CM 0 (S89).

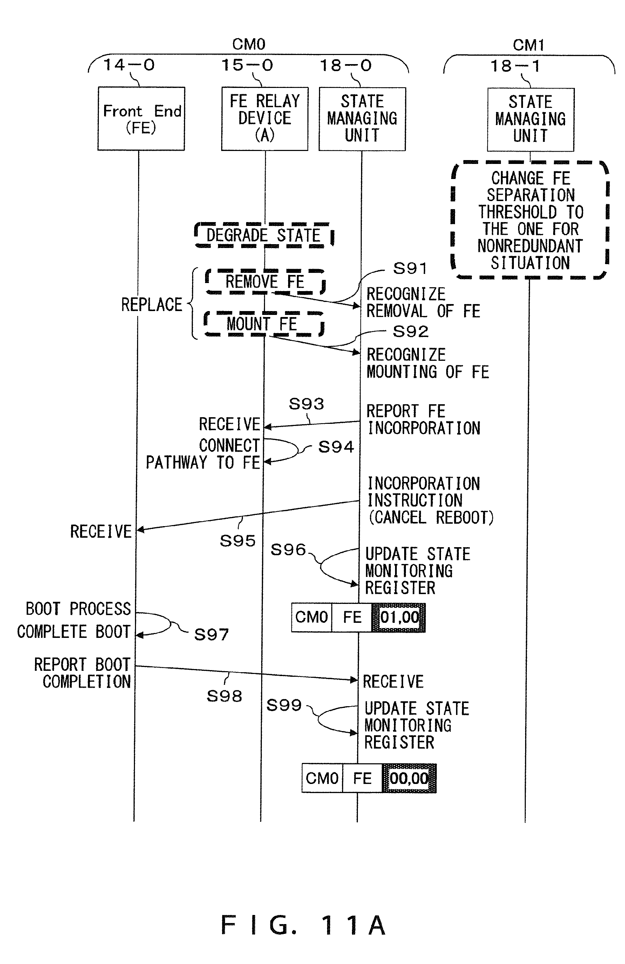

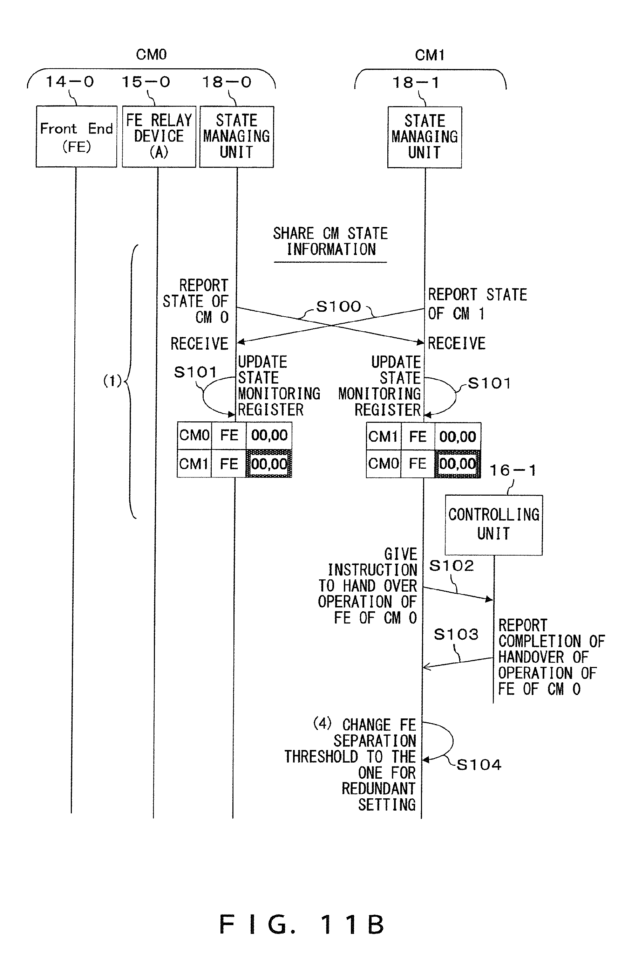

FIG. 11A and FIG. 11B illustrate exemplary flows of a maintenance operation (change of an FE) in accordance with the embodiment. These examples are also applicable to an abnormality occurrence on the BE side or the controlling-unit side. The FE relay device 15-0 and the FE have been separated from the CM 0 (degrade state). The state managing unit 18-1 on the CM-1 side sets, as an FE separation threshold, a value used for a nonredundant configuration.

When a maintenance person removes the FE 14-0 from the FE relay device (A) 15-0, the state managing unit 18 recognizes that the FE 14-0 has been removed from the FE relay device (A) 15-0 (S91). The state managing unit 18 itself recognizes that the FE 14-0 has been removed. The pathway connecting the FE relay device (A) 15-0 and the FE 14-0 has been disconnected, and hence the FE relay device (A) 15-0 cannot recognize that the FE 14-0 has been removed or mounted.

When the maintenance person connects a new FE 14-0 to the FE relay device (A) 15-0, the FE relay device (A) 15-0 reports this fact to the state managing unit 18-0. Upon receipt of the report, the state managing unit 18-0 recognizes that the FE 14-0 has been mounted (S92).

The state managing unit 18-0 reports to the FE relay device (A) 15-0 that the FE 14-0 is to be incorporated (S93). Upon receipt of the report that the FE 14-0 is to be incorporated, the FE relay device (A) 15-0 connects a pathway to the FE 14-0 (S94).

The state managing unit 18-0 gives an incorporation instruction (reboot cancellation instruction) to the FE 14-0 (S95) and updates the state monitoring register 19 for the FE 14-0 (S96). Accordingly, the state-monitoring-register value of the state monitoring register 19 for the FE 14-0 of the CM 0 is updated to (functional-block-state register [1:0], fault monitoring register [1:0])=(01, 00).

Upon receipt of an incorporation instruction (reboot cancellation instruction) from the state managing unit 18-0, the FE 14-0 performs booting (S97). Completing booting, the FE 14-0 reports a boot completion to the state managing unit 18-0 (S98).

Upon receipt of the report of a reboot completion from the FE 14-0, the state managing unit 18-0 updates the state monitoring register 19 for the FE 14-0 (S99). Accordingly, the state-monitoring-register value of the state monitoring register 19 for the FE of the CM 0 is updated to (functional-block-state register [1:0], fault monitoring register [1:0])=(00, 00).

Then, the state managing units 18-0 and 18-1 perform polling and transmit information of the state monitoring register (CM state information) to each other so as to share CM state information (S100). Upon receipt of the CM state information of the communications partner, the state managing units 18 each update the state monitoring register 19 using the CM state information (S101). Accordingly, in the CM 0, the state-monitoring-register value for the FE 14-1 of the CM 1 is updated to (functional-block-state register [1:0], fault monitoring register [1:0])=(00, 00). In the CM 1, the state-monitoring-register value for the FE 14-0 of the CM 0 is updated to (functional-block-state register [1:0], fault monitoring register [1:0])=(00, 00).

The state managing unit 18-1 instructs the controlling unit 16-1 to stop taking over the operation of the FE 14-0 of the CM 0 (S102). Completing the handover of the operation of the FE 14-0 of the CM 0, the controlling unit 16-1 reports the completion to the state managing unit 18-1 (S103). The state managing unit 18-1 reads an FE separation threshold for the redundancy-maintained time from the separation-threshold storing table 50 and sets this threshold at a predetermined storage region within the state managing unit 18-1 (S104).

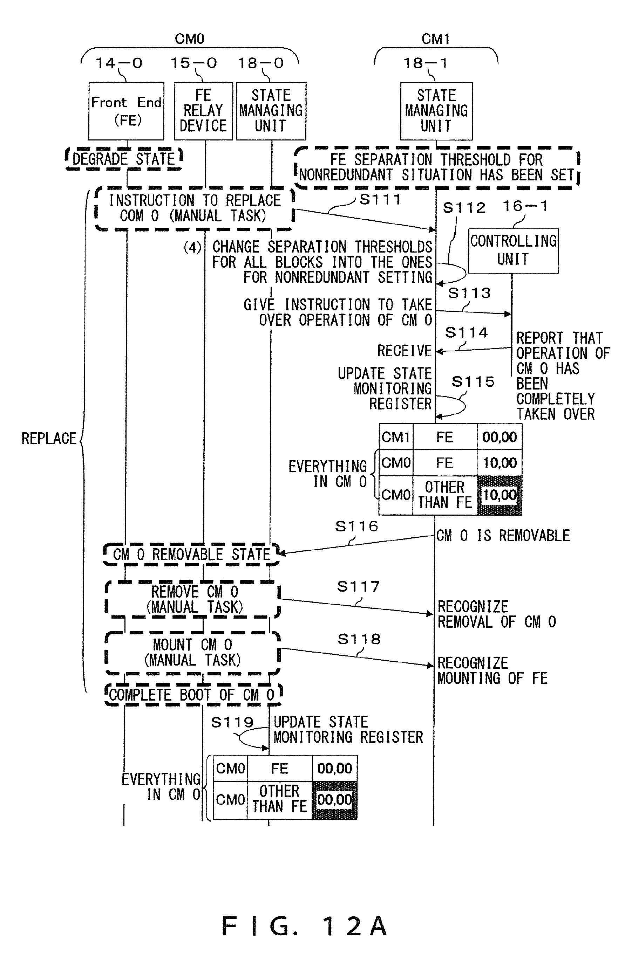

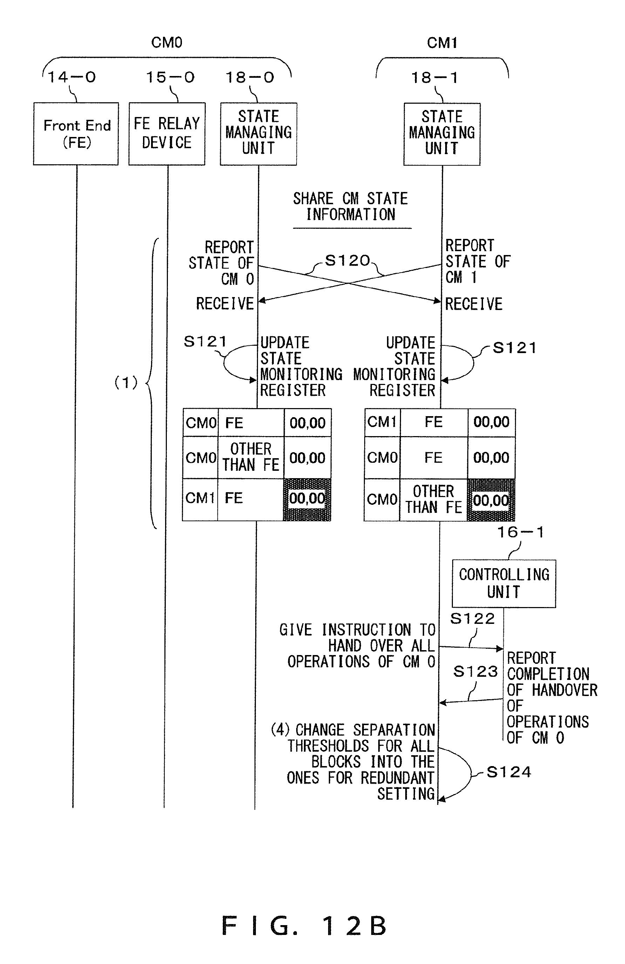

FIG. 12A and FIG. 12B illustrate exemplary flows of an operation performed for maintenance (maintenance for a condition in which an FE cannot be removed) in accordance with the embodiment. FIG. 12A and FIG. 12B depict flows based on a situation in which, as the FE cannot be removed alone, other devices are also replaced. These flows are also applicable to an abnormality occurrence on the BE side or the controlling-unit side. The FE has been separated from the system (degrade state) due to a fault. The state managing unit 18 on the CM-1 side sets, as an FE separation threshold, a threshold used for a nonredundant configuration.

First, in a manual task by a maintenance person, an instruction to replace the CM 0 is input to the CM 1 (S111).

The state managing unit 18-1 of the CM 1 changes the FE separation thresholds for all functional blocks within the CM 1 into the ones used for a nonredundant situation (S112). The state managing unit 18-1 of the CM 1 instructs the controlling unit 16-1 to take over the operation of the CM 0 (S113). When the controlling unit 16-1 completely takes over the operation of the FE 14-0 of the CM 0, the controlling unit 16-1 reports the completion to the state managing unit 18-1 (S114).

Upon receipt of the report from the controlling unit 16-1 that the operation of the CM 0 has been completely taken over, the state managing unit 18-1 updates the state monitoring register 19 for the functional blocks within the CM 0 other than the FE (S115). Accordingly, the state-monitoring-register values of the state monitoring register 19 for all of the functional blocks of the CM 0 are updated to (functional-block-state register [1:0], fault monitoring register [1:0])=(10, 00).

A problem does not occur in the state managing unit 18-1 even when the CM 0 is removed from the RAID apparatus 12 (S116), and hence the maintenance person removes the CM 0 from the RAID apparatus 12. Accordingly, the state managing unit 18-1 recognizes that the CM 0 has been removed from the RAID apparatus 12 (S117). The maintenance person manually mounts a new CM 0 into the RAID apparatus 12. Then, the state managing unit 18-1 recognizes an FE of the newly mounted CM 0 (S118). Subsequently, the CM 0 is automatically booted.

The state managing unit 18-0 updates the state monitoring register 19 of the CM 0 (S119). Accordingly, the state-monitoring-register values of the state monitoring register 19 for all of the functional blocks of the CM 0 are updated to (functional-block-state register [1:0], fault monitoring register [1:0])=(00, 00).

The state managing units 18-0 and 18-1 perform polling and transmit information of the state monitoring register (CM state information) to each other so as to share CM state information (S120). Upon receipt of the CM state information of the communications partner, the state managing units 18 each update the state monitoring register 19 using the CM state information (S121). Accordingly, in the CM 0, the state-monitoring-register value for the FE of the CM 1 is updated to (functional-block-state register [1:0], fault monitoring register [1:0])=(00, 00). In the CM 1, the state-monitoring-register values for the functional blocks of the CM 0 other than the FE are updated to (functional-block-state register [1:0], fault monitoring register [1:0])=(00, 00).

The state managing unit 18-1 instructs the controlling unit 16-1 to hand over all of the operations of the functional blocks within the CM 0 (S122). Completing the handover of all of the operations of the functional blocks within the CM 0, the controlling unit 16-1 reports the completion to the state managing unit 18-1 (S123).

The state managing unit 18-1 reads, from the separation-threshold storing table 50, separation thresholds for the redundancy-maintained time for all blocks and sets these thresholds at a predetermined storage region within the state managing unit 18-1 (S124).

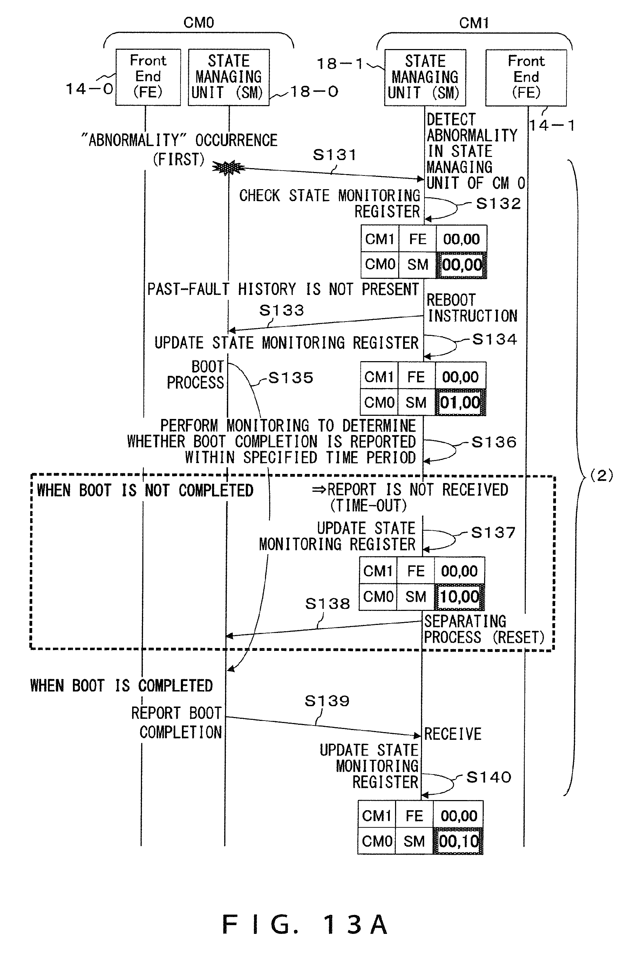

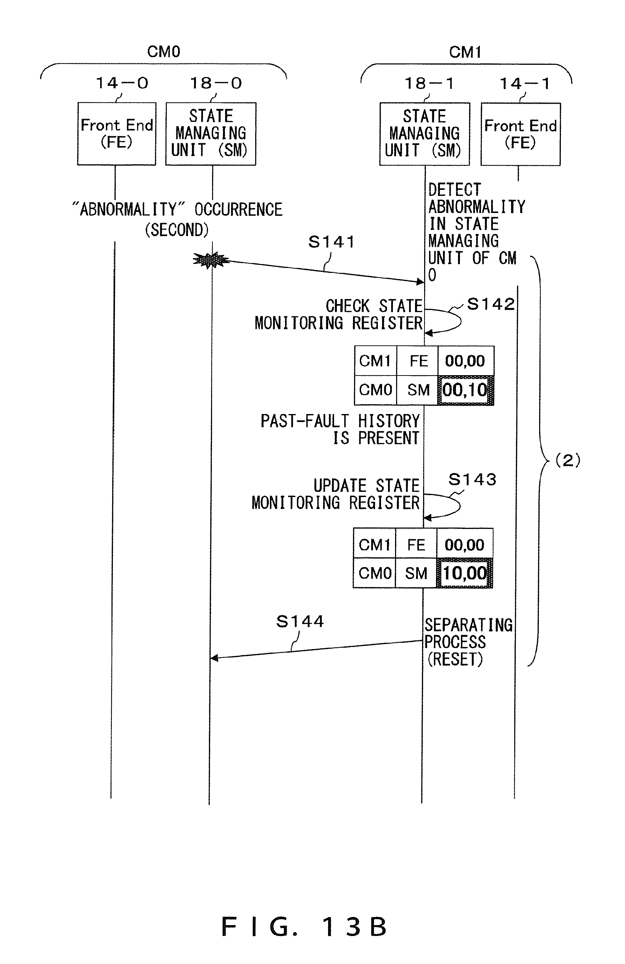

FIG. 13A and FIG. 13B illustrate exemplary flows of an operation performed when a state managing unit in accordance with the embodiment fails. In FIG. 13A and FIG. 13B, the state managing unit is indicated as an SM.

When an abnormality occurs in the state managing unit 18-0 of the CM 0, the state managing unit 18-1 of the CM 1 detects the abnormality (S131). The state managing unit 18-1 checks the state monitoring register 19 (S132). In this case, the state-monitoring-register values of the state monitoring register 19 for the FE 14-0 and the state managing unit of the CM 0 are (functional-block-state register [1:0], fault monitoring register [1:0])=(00, 00), and hence neither of the elements has past-fault history.

The state managing unit 18-1 gives a reboot instruction to the state managing unit 18-0 (S133) and updates the state monitoring register 19 for the state managing unit 18-0. Accordingly, the state-monitoring-register value of the state monitoring register 19 for the state managing unit 18-0 is updated to (functional-block-state register [1:0], fault monitoring register [1:0])=(01, 00) (S134). The state managing unit 18-1 performs monitoring to determine whether a boot completion is reported from the state managing unit 18-1 within a specified time period (S136).

At the state managing unit 18-0 of the CM 0, reboot is performed upon receipt of the reboot instruction from the state managing unit 18-1 (S135).

In the process of S135, in some cases, boot is not completed, and, in other cases, boot is completed. First, descriptions will be given of a situation in which boot is not completed. When a boot completion is not reported from the state managing unit 18-0 of the CM 0 within a specified time period (time-out), the state managing unit 18-1 updates the state monitoring register for the state managing unit 18-0 (S137). Accordingly, the state-monitoring-register value of the state monitoring register 19 for the state managing unit 18-0 of the CM 0 is updated to (functional-block-state register [1:0], fault monitoring register [1:0])=(10, 00) (S137).

The state managing unit 18-1 reports that the state managing unit 18-0 is to be separated from the system (reset process) (S138).

Next, descriptions will be given of a situation in which boot is completed. When boot is completed, the state managing unit 18-0 reports this fact to the state managing unit 18-1 (S139). The state managing unit 18-1 updates the state monitoring register for the state managing unit 18-0 (S140). Accordingly, the state-monitoring-register value of the state monitoring register 19 for the state managing unit 18-0 of the CM 0 is updated to (functional-block-state register [1:0], fault monitoring register [1:0])=(00, 10).

When an abnormality occurs again in the state managing unit 18-0, the state managing unit 18-1 detects the abnormality (S141). The state managing unit 18-1 checks the state monitoring register 19 (S142). In this case, the state-monitoring-register value of the state monitoring register 19 for the state managing unit (SM) of the CM 0 is (functional-block-state register [1:0], fault monitoring register [1:0])=(00, 10), which means that past-fault history is present for the state managing unit (SM) of the CM 0.

Accordingly, the state managing unit 18-1 updates the state monitoring register 19 for the state managing unit (SM) 18-0 (S143). In this example, since an abnormality report has been received from the CM 0 with "1" set as the "number of faults that occurred in the past" of the fault monitoring register for the state managing unit (SM) of the CM 0, the state managing unit 18 performs the following process. That is, the state managing unit 18 updates the "degrade state" of the functional-block-state register for the state managing unit (SM) 18-0 to "1" and updates the fault monitoring register [1:0] with (00).

The state managing unit 18-1 reports that the state managing unit 18-0 is to be separated from the system (reset process) (S144).

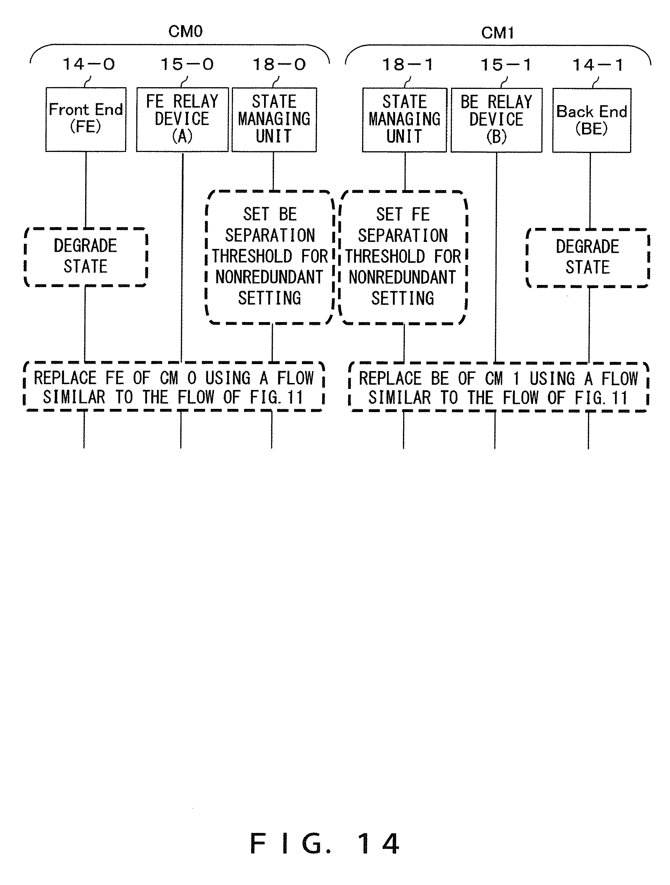

FIG. 14 illustrates an exemplary flow of maintenance in accordance with the embodiment performed when a CM 0 and a CM 1 each have a different block separated therefrom. FIG. 14 depicts a situation in which the FE of the CM 0 is in a degrade state, the BE of the CM 1 is in a degrade state, and the FE and the BE are each individually removable.

In the CM 0, the FE 14-0 is in the degrade state, and a BE separation threshold of the state managing unit 18-0 has been changed into a value used for a nonredundant configuration. In the CM 1, the BE 14-1 is in the degrade state, and an FE separation threshold of the state managing unit 18-1 has been changed into a value used for a nonredundant configuration. In this case, using a flow similar to the one in FIG. 11 allows the FE of the CM 0 and the BE of the CM 1 to be replaced.

In this way, in FIG. 14, maintenance can be performed without stopping the system when the FE and the BE are each individually removable.

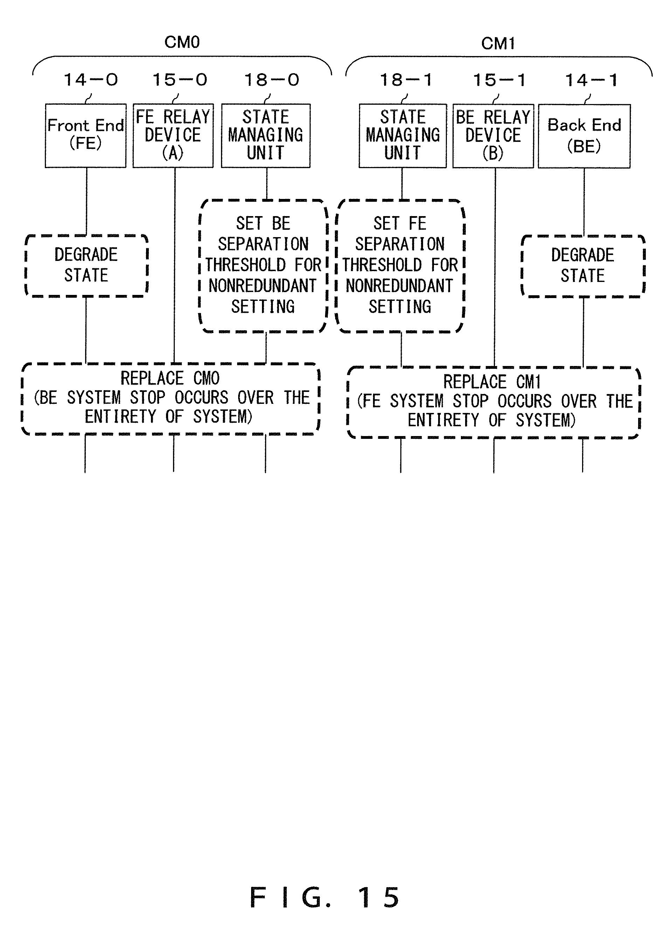

FIG. 15 illustrates another exemplary flow of maintenance in accordance with the embodiment performed when a CM 0 and a CM 1 each have a different functional block separated therefrom. FIG. 15 depicts a situation in which the FE of the CM 0 is in a degrade state, the BE of the CM 1 is in a degrade state, and the FE and the BE are not each individually removable.

In the CM 0, the FE is in the degrade state, and a BE separation threshold of the state managing unit 18-0 has been changed into a value for a nonredundant setting. In the CM 1, the BE is in the degrade state, and the FE separation threshold for the state managing unit 18-1 has been changed into a value used for a nonredundant configuration. In this case, the CM 0 and the CM 1 are replaced.

As described above, maintenance involves system stop when the FE and the BE cannot be individually removed. This is also applicable to the occurrence of an abnormality in the controlling unit. To improve the continuity of the system operation, elements such as the FE and the BE advantageously are individually removable.

The following will describe a situation in which a functional block is separated in accordance with the number of abnormalities that have occurred.

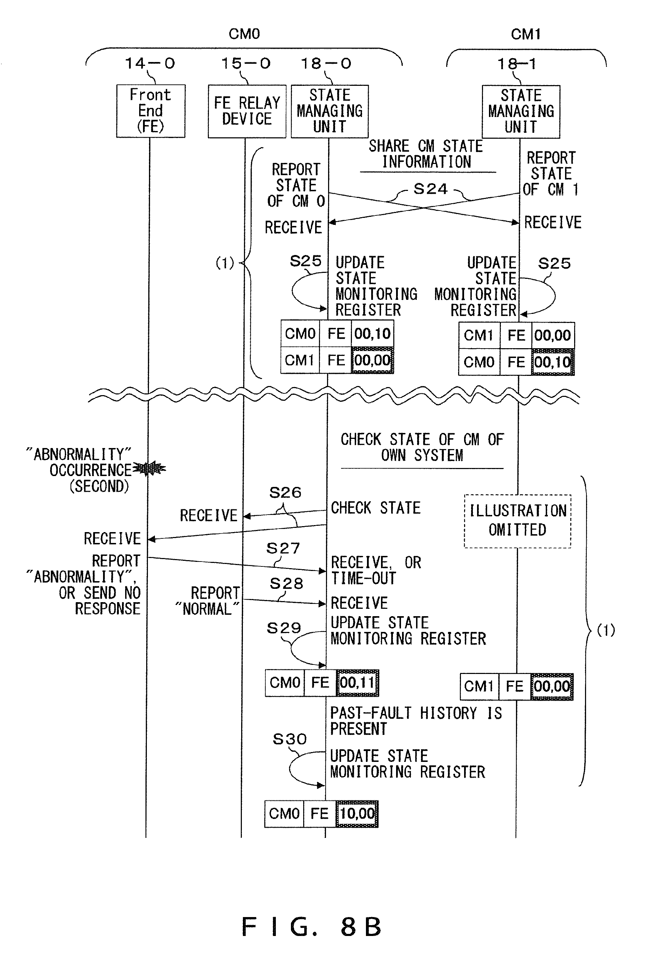

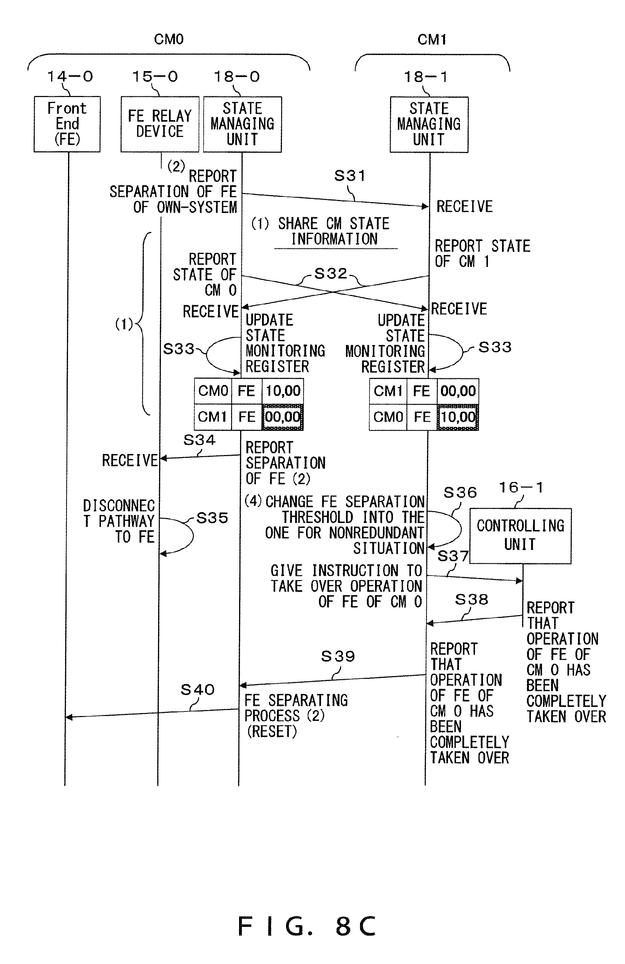

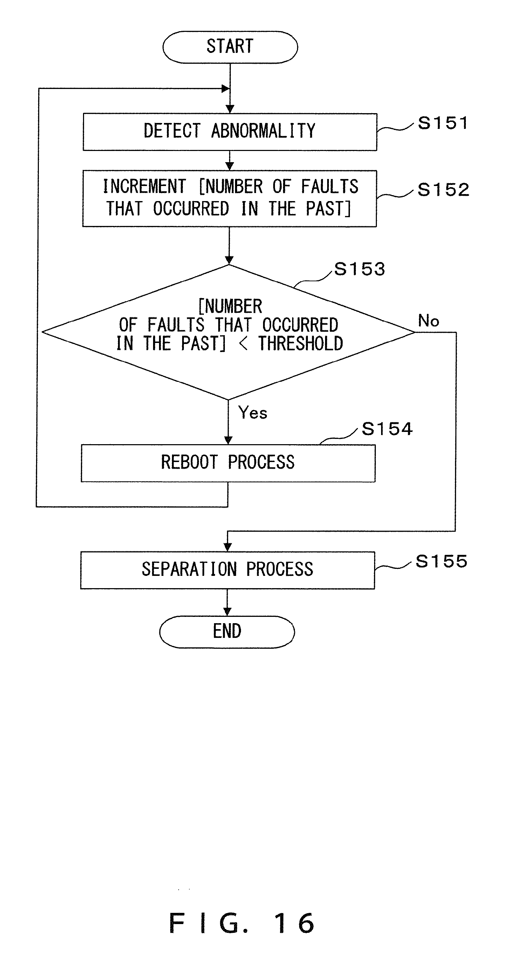

FIG. 16 illustrates an exemplary flow of separating a functional block in accordance with the embodiment, the separating depending on the number of abnormalities that occurred. FIG. 16 depicts an exemplary flow performed in the case of the reboot instruction and the separation process in FIG. 8 to FIG. 13. The flow of FIG. 16 is executed via the state managing unit 18 reading a program in accordance with the embodiment.

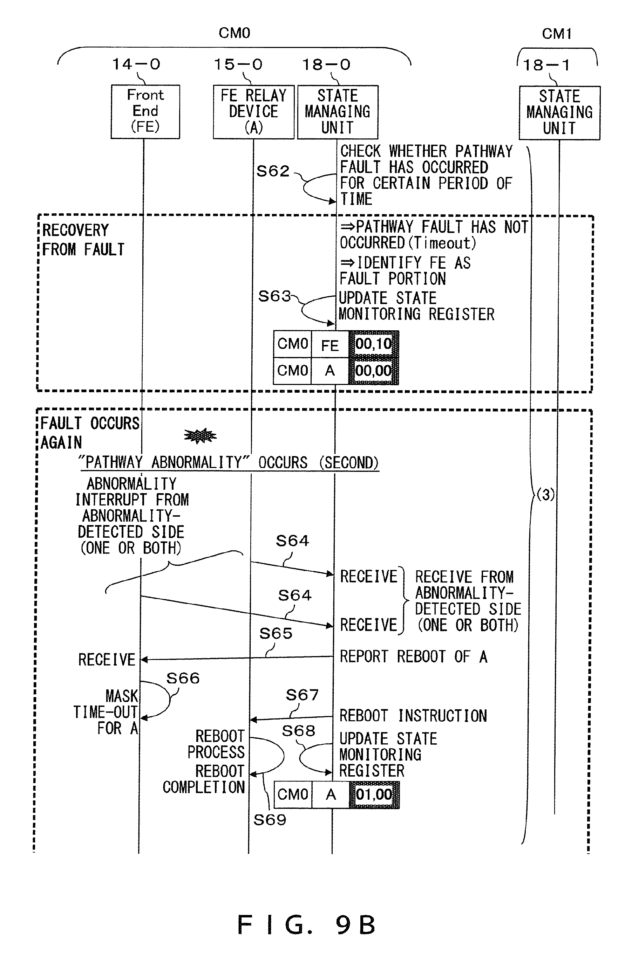

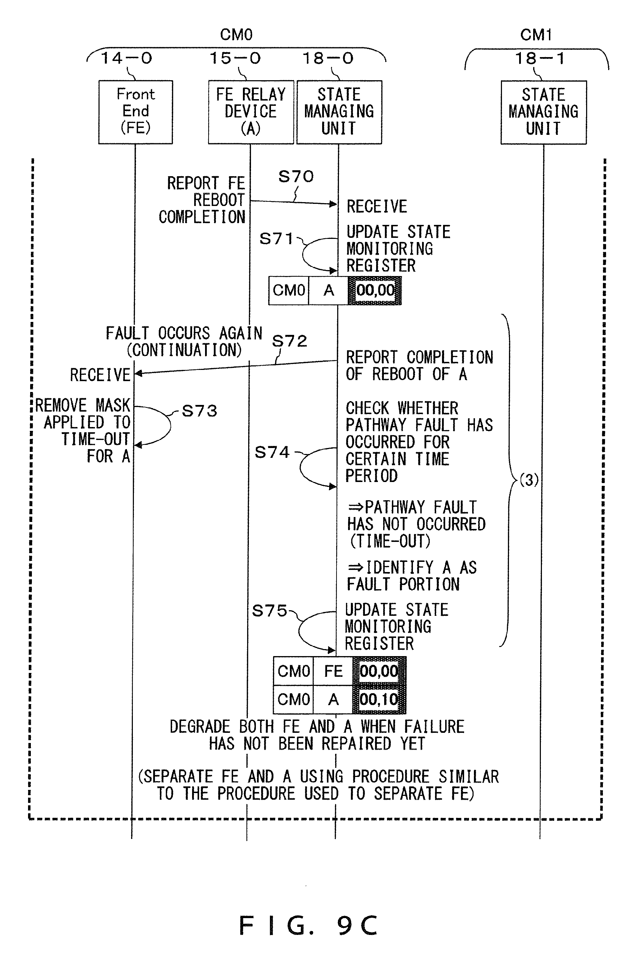

When the state managing unit 18 detects an abnormality at a functional block or an abnormality between functional blocks within the own-system CM (S151), the state managing unit 18 increments the "number of faults that occurred in the past" of the fault monitoring register 42 (S152). Note that a fault between pathways in FIG. 9 to FIG. 10 is counted as an abnormality related to a device specified as a fault portion.

The state managing unit 18 compares the "number of faults that occurred in the past" of the fault monitoring register 42 with a threshold (S153). When the "number of faults that occurred in the past" < the threshold, the state managing unit 18 reboots the functional block at which an abnormality has been detected or a functional block between the functional blocks at which an abnormality has been detected (S154), and returns to S151.

In S153, when the "number of faults that occurred in the past" ≧ the threshold, the state managing unit 18 separates the functional block from the system (S155).

In this way, in accordance with past-fault history, a functional block to be separated may be specified and separated. This may improve the availability of the system. In FIG. 16, the "number of faults that occurred in the past" is used to make the evaluations for the separation, but elements such as the "number of non-fatal errors that have occurred" and the "number of fatal errors that have occurred" may be used to make the evaluations.

The following will describe a situation in which a threshold used to separate a functional block is adjusted in accordance with whether the redundancy of functional blocks is maintained.

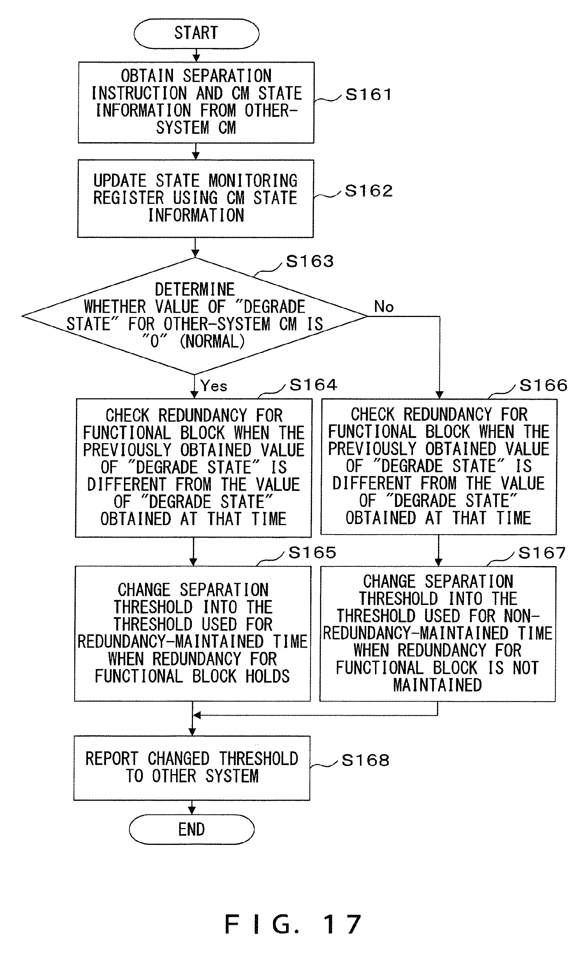

FIG. 17 illustrates an exemplary flow of adjusting a threshold used to separate a functional block in accordance with the embodiment, the adjusting depending on whether the redundancy of functional blocks is maintained. The flow of FIG. 17 is executed via the state managing unit 18 reading a program in accordance with the embodiment.

The state managing unit 18 obtains a separation instruction and CM state information from the other-system CM (S161). The state managing unit 18 updates the state monitoring register 19 using the obtained CM state information (S162).

The state managing unit 18 determines whether the value of the "degrade state" of the CM state information for each functional block is "0" (normal) (S163).

In the case of the value of the "degrade state" that is "0" (normal), when a previously obtained value of the "degrade state" is different from the value of the "degrade state" obtained at that time, the state managing unit 18 determines whether the redundancy for the functional block holds (S164). When the redundancy for the functional block holds, the state managing unit 18 changes the separation threshold into a value used for the redundancy-maintained time (S165).

In the case of the value of the "degrade state" that is not "0" (abnormal), when a previously obtained value of the "degrade state" is different from the value of the "degrade state" obtained at that time, the state managing unit 18 checks the redundancy for the functional block (S166). That is, the state managing unit 18 determines whether the redundancy for the functional block could be maintained if the functional block were separated (S167). Determining that the redundancy for the functional block could not be maintained, the state managing unit 18 changes the separation threshold into a value used for the non-redundancy-maintained time (S167).

The state managing unit 18 reports the changed threshold to the other-system CM (S168).

In this manner, the threshold used to separate a functional block may be adjusted in accordance with whether the redundancy for a functional block is maintained.

An aspect of the invention may improve the availability of an information processing system.

The invention is not limited to the aforementioned embodiments and may use various configurations or embodiments without departing from the scope of the invention.

## Claims

1. A processing apparatus (2, 13) that constitutes an information processing system (1, 12), the processing apparatus comprising:
a device (3, 14-17, 20-22) configured to constitute the processing apparatus; and
a processing unit (4, 18) configured to detect an abnormality in the device, to count a number of the abnormalities detected in the device, and to logically separate the device from the information processing system when the counted number of the abnormalities detected in the device is equal to or greater than a threshold.

2. The processing apparatus (2, 13) according to claim 1, wherein
the processing unit (4, 18) performs reboot of the device when the number of the abnormalities detected in the device (3, 14-17, 20-22) is less than the threshold.

3. The processing apparatus (2, 13) according to claim 2, wherein the processing unit (4, 18)
obtains, from another processing apparatus (2a, 13), operation status information related to an operation status of a device (3, 14-17, 20-22) of the other processing apparatus (2a, 13),
according to the operation status information, determines whether a redundant state for the device is achieved when the device is logically separated, and
according to a result of the determination, adjusts the threshold for the number of the abnormalities related to the device.

4. The processing apparatus (2, 13) according to claim 3, wherein
when the redundant state for the device is not achieved due to the logical separating of the device (3, 14-17, 20-22), the processing unit (4, 18) sets a threshold that is higher than the threshold that is set when the redundant state for the device is achieved.

5. The processing apparatus (2, 13) according to any of claims 1 to 4, wherein the processing unit (4, 18)
reboots a device located between the devices when an abnormality between the devices is detected, and specifies the rebooted device as a fault portion when an abnormality is not detected within a predetermined time period,
reboots a device located between the devices that is different from the previously rebooted device when an abnormality between the devices is detected again within the predetermined time period, and specifies the rebooted device as a fault portion when an abnormality is not detected within the predetermined time period, and
determines the rebooted device as an abnormality in the device specified as the fault portion.

6. A processing program for causing a processing apparatus (2, 13) that constitutes an information processing system (1, 12) to execute a process comprising:
detecting an abnormality in a device (3, 14-17, 20-22) that constitutes the processing apparatus (S151);
counting a number of the abnormalities detected in the device (S152); and
logically separating the device from the information processing system when the counted number of the abnormalities detected in the device is equal to or greater than a threshold (S155).

7. The processing program according to claim 6, wherein
the logically separating performs reboot of the device when the number of the abnormalities detected in the device is less than the threshold (S154).

8. The processing program according to claim 7, wherein
the logically separating obtains, from another processing apparatus (2a, 13), operation status information related to an operation status of a device of the other processing apparatus (2a, 13), according to the operation status information, determines whether a redundant state for the device is achieved when the device is logically separated, and, according to a result of the determination, and adjusts the threshold for the number of the abnormalities related to the device (S163 to S168).

9. The processing program according to claim 8, wherein
the logically separating sets a threshold that is higher than the threshold that is set when the redundant state for the device is achieved (S167) in a case that the redundant state for the device is not achieved due to the logical separating of the device.

10. The processing program according to any of claims 6 to 9, wherein the logically separating
reboots a device located between the devices when an abnormality between the devices is detected, and specifies the rebooted device as a fault portion when an abnormality is not detected within a predetermined time period,
reboots a device located between the devices that is different from the previously rebooted device when an abnormality between the devices is detected again within the predetermined time period, and specifies the rebooted device as a fault portion when an abnormality is not detected within the predetermined time period, and
counts the rebooted device as an abnormality in the device specified as the fault portion (S51 to S75).

11. A processing method performed by a processing apparatus that constitutes an information processing system, the processing method comprising:
detecting, by using the processing apparatus, an abnormality in a device (3, 14-17, 20-22) that constitutes the processing apparatus (S151),
counting, by using the processing apparatus, a number of the abnormalities detected in the device (S152), and
logically separating, by using the processing apparatus, the device from the information processing system when the counted number of the abnormalities detected in the device is equal to or greater than a threshold (S155).

12. The processing method according to claim 11, wherein
the logically separating performs reboot.of the device when the number of the abnormalities detected in the device is less than the threshold (S154).

13. The processing method according to claim 12, wherein
the logically separating obtains, from another processing apparatus (2a, 13), operation status information related to an operation status of a device of the other processing apparatus (2a, 13), according to the operation status information, determines whether a redundant state for the device is achieved when the device is logically separated, and, according to a result of the determination, and adjusts the threshold for the number of the abnormalities related to the device (S163 to S168).

14. The processing method according to claim 13, wherein
the logically separating sets a threshold that is higher than the threshold that is set when the redundant state for the device is achieved (S167) in a case that the redundant state for the device is not achieved due to the logical separating of the device.

15. The processing method of any of claims 11 to 14, wherein the logically separating
reboots a device located between the devices when an abnormality between the devices is detected, and specifies the rebooted device as a fault portion when an abnormality is not detected within a predetermined time period,
reboots a device located between the devices that is different from the previously rebooted device when an abnormality between the devices is detected again within the predetermined time period and specifies the rebooted device as a fault portion when an abnormality is not detected within the predetermined time period, and
counts the rebooted device as an abnormality in the device specified as the fault portion (S51 to S75).
